# EUROPEAN PATENT APPLICATION

(11) **EP 4 614 891 A1**
(43) Date of publication of application: **10.09.2025**
(21) Application number: 22963817.6
(22) Date of filing: 01.11.2022
(51) Int. Cl.: H04L 27/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN); SHI, Zhihua, Dongguan, Guangdong 523860 (CN)
(74) Representative: Mewburn Ellis LLP
(86) International application number: PCT/CN2022/128935
(87) International publication number: WO 2024/092498

(57) **Abstract**

A wireless communication method and a device are provided in embodiments of the present disclosure, which are conducive to reducing an overhead and delay caused by a beam sweeping process. The wireless communication method includes: acquiring, by a first communication device, a first measurement data set; where the first measurement data set includes at least one of: identification information of spatial filters in M measurement instances, or link quality information corresponding to the spatial filters in the M measurement instances; where M is a positive integer; and inputting, by the first communication device, the first measurement data set into a first network model, to output a first prediction data set; where the first prediction data set includes at least one of: identification information of predicted K spatial filters in respective prediction instances of F prediction instances, link quality information corresponding to the predicted K spatial filters in the respective prediction instances of the F prediction instances, or dwelling time of the predicted K spatial filters in the respective prediction instances of the F prediction instances; where F and K are both positive integers.

## Description

### TECHNICAL FIELD

Embodiments of the present disclosure relate to the field of communications, and more specifically, to a wireless communication method and a device.

### BACKGROUND

In a new radio (NR) system, millimeter wave frequency band communication has been introduced, and a corresponding beam management mechanism is also introduced. Specifically, the beam management mechanism may be divided into an uplink beam management and a downlink beam management. Downlink beam management may include: processes such as downlink beam sweeping, optimal beam reporting on a terminal side, downlink beam indication on a network side. Specifically, the network device sweeps all transmission beam directions through a downlink reference signal. The terminal device may use different receiving beams to perform measurements, thereby enabling the traversal of all beam pairs.

Therefore, it is evident that the terminal device needs to traverse all combinations of transmission beams and receiving beams to select an optimal beam, which will incur substantial overhead and delay.

### SUMMARY

A wireless communication method and a device are provided in the embodiments of the present disclosure, which are conducive to reducing the overhead and delay caused by the beam sweeping process.

In a first aspect, there is provided a wireless communication method, where the method includes:
acquiring, by a first communication device, a first measurement data set; where the first measurement data set includes at least one of: identification information of spatial filters in M measurement instances, or link quality information corresponding to the spatial filters in the M measurement instances; where M is a positive integer; and
inputting, by the first communication device, the first measurement data set into a first network model, to output a first prediction data set; where the first prediction data set includes at least one of: identification information of predicted K spatial filters in respective prediction instances of F prediction instances, link quality information corresponding to the predicted K spatial filters in the respective prediction instances of the F prediction instances, or a dwelling time of the predicted K spatial filters in the respective prediction instances of the F prediction instances; where F and K are both positive integers.

In a second aspect, there is provided a communication device for performing the method in the above-mentioned first aspect.

Specifically, the communication device includes a functional module for performing the method in the above-mentioned first aspect.

In a third aspect, there is provided a communication device, including a processor and a memory; the memory is configured to store a computer program, and the processor is configured to call and run the computer program stored in the memory, to enable the communication device to perform the method in the above-mentioned first aspect.

In a fourth aspect, there is provided an apparatus for implementing the method in the above-mentioned first aspect.

Specifically, the apparatus includes: a processor, configured to call a computer program from a memory and run the computer program, to enable a device equipped with the apparatus to perform the method in the above-mentioned first aspect.

In a fifth aspect, there is provided a computer-readable storage medium for storing a computer program, where the computer program enables a computer to perform the method in the above-mentioned first aspect.

In a sixth aspect, there is provided a computer program product, including computer program instructions, where the computer program instructions enable a computer to perform the method in the above-mentioned first aspect.

In a seventh aspect, there is provided a computer program, where the computer program, upon being executed on a computer, enables the computer to perform the method in the above-mentioned first aspect.

Through the above technical solution, the first communication device can realize spatial filter prediction in time domain based on the first network model, and the first communication device does not need to scan all deployed spatial filters, which is beneficial to reducing the overhead and delay caused by spatial filter sweeping.

### BRIEF DESCRIPTION OF THE DRAWINGS

FIG. 1 is a schematic diagram of a communication system architecture provided in the embodiments of the present disclosure.
FIG. 2 is a schematic diagram of connections of neurons in a neural network.
FIG. 3 is a schematic structural diagram of a neural network.
FIG. 4 is a schematic diagram of a convolutional neural network.
FIG. 5 is a schematic structural diagram of a Long Short-Term Memory (LSTM) unit.
FIG. 6 is a schematic diagram of an LSTM model provided in the embodiments of the present disclosure.
FIG. 7 is a schematic diagram of a downlink beam sweeping process.
FIG. 8 is a schematic diagram of another downlink beam sweeping process.
FIG. 9 is a schematic diagram of yet another downlink beam sweeping process.
FIG. 10 is a schematic diagram of a wireless communication method provided according to the embodiments of the present disclosure.
FIG. 11 is a schematic diagram of a data set B (Set B) provided according to the embodiments of the present disclosure.
FIG. 12 is a schematic diagram of a data set A (Set A) provided according to the embodiments of the present disclosure.
FIG. 13 is a flowchart of a beam prediction provided according to the embodiments of the present disclosure.
FIG. 14 is a flowchart of another beam prediction provided according to the embodiments of the present disclosure.
FIG. 15 is that Set B has different Tx beam configurations in different measurement instances provided according to the embodiments of the present disclosure.
FIG. 16 is a schematic diagram of one DCI triggering multiple Set B measurements provided according to the embodiments of the present disclosure.
FIG. 17 is a schematic diagram of Set A having different Tx beam configurations in different prediction instances provided according to the embodiments of the present disclosure.
FIG. 18 is a schematic diagram of Tx beam configurations X and Y of Set A appearing alternately provided according to the embodiments of the present disclosure.
FIG. 19 is a schematic diagram of beam dwelling time in time domain beam prediction provided according to the embodiments of the present disclosure.
FIG. 20 is a schematic block diagram of a communication device provided according to the embodiments of the present disclosure.
FIG. 21 is a schematic block diagram of a communication device provided according to the embodiments of the present disclosure.
FIG. 22 is a schematic block diagram of an apparatus provided according to the embodiments of the present disclosure.
FIG. 23 is a schematic block diagram of a communication system provided according to the embodiments of the present disclosure.

### DETAILED DESCRIPTION

The technical solutions in the embodiments of the present disclosure will be described in conjunction with the drawings in the embodiments of the present disclosure. Obviously, the described embodiments are a part of the embodiments of the present disclosure, but not all of the embodiments. For the embodiments of the present disclosure, all other embodiments obtained by the ordinary skilled in the art without paying creative efforts belong to the protection scope of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), internet of things (IoT), wireless fidelity (Wi-Fi), a 5th-generation (5G) system, a 6th-generation (6G) system, or other communication systems.

Generally speaking, a number of connections supported by a traditional communication system is limited and is easy to implement. However, with the development of the communication technology, the mobile communication system will not only support the traditional communication, but also support, for example, device to device (D2D) communication, machine to machine (M2M) communication, machine type communication (MTC), vehicle to vehicle (V2V) communication, sidelink (SL) communication, or vehicle to everything (V2X) communication, etc, and the embodiments of the present disclosure may also be applied to these communication systems.

In some embodiments, a communication system in the embodiments of the present disclosure may be applied to a carrier aggregation (CA) scenario, a dual connectivity (DC) scenario, a standalone (SA) networking scenario, or a non-standalone (NSA) networking scenario.

In some embodiments, the communication system in the embodiments of the present disclosure may be applied to an unlicensed spectrum, where the unlicensed spectrum may also be considered as a shared spectrum; or, the communication system in the embodiments of the present disclosure may also be applied to a licensed spectrum, where the licensed spectrum may also be considered as an unshared spectrum.

In some embodiments, the communication system in the embodiments of the present disclosure may be applied to an FR1 frequency band (corresponding to a frequency band range of 410 MHz to 7.125 GHz), and may also be applied to an FR2 frequency band (corresponding to a frequency band range of 24.25 GHz to 52.6 GHz), and may also be applied to new frequency bands such as high-frequency frequency bands corresponding to a frequency band range of 52.6 GHz to 71 GHz or corresponding to a frequency band range of 71 GHz to 114.25 GHz.

The embodiments of the present disclosure describe various embodiments in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (ST) in WLAN, and may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (such as an NR network), a terminal device in a future evolved public land mobile network (PLMN) network, or the like.

In the embodiments of the present disclosure, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an vehicle-mounted communication device, a wireless communication chip/application specific integrated circuit (ASIC)/system on chip (SoC), or the like.

By way of example and not limitation, in the embodiments of the present disclosure, the terminal device may also be a wearable device. The wearable device may also be referred to as a wearable smart device, which is a general term for wearable devices intelligently designed and developed by using wearable technology for everyday wear, such as glasses, gloves, a watch, clothing, or shoes. The wearable device is a portable device that is worn directly on a body, or integrated into a user's clothing or accessories. The wearable device is not only a hardware device, but also implements powerful functions through software support as well as data interaction or cloud interaction. Generalized wearable smart devices include devices that are full-featured, large-sized and may implement full or partial functionality without relying on smart phones, such as a smart watch or smart glasses, and devices that focus on a certain type of application functionality only and need to be used in conjunction with other devices (such as smart phones), such as various smart bracelets or pieces of smart jewelry for monitoring physical signs.

In the embodiments of the present disclosure, the network device may be a device for communicating with a mobile device. The network device may be an access point (AP) in WLAN, a base station (Base Transceiver Station, BTS) in GSM or CDMA, a base station (NodeB, NB) in WCDMA, an evolved base station (Evolutional NodeB, eNB or eNodeB) in LTE, a relay station or access point, an in-vehicle device, a wearable device, a network device, a base station (gNB) or a transmission reception point (TRP) in an NR network, or a network device in a future evolved PLMN network, or a network device in an NTN network, etc.

By way of example and not limitation, in the embodiments of the present disclosure, the network device may have a mobile characteristic. For example, the network device may be a mobile equipment. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments, the network device may also be a base station set up on land, water, or the like.

In the embodiments of the present disclosure, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell herein may include: a metro cell, a micro cell, a pico cell, a femto cell, etc. These small cells have characteristics of small coverage and low transmission power, and are suitable for providing high-speed data transmission services.

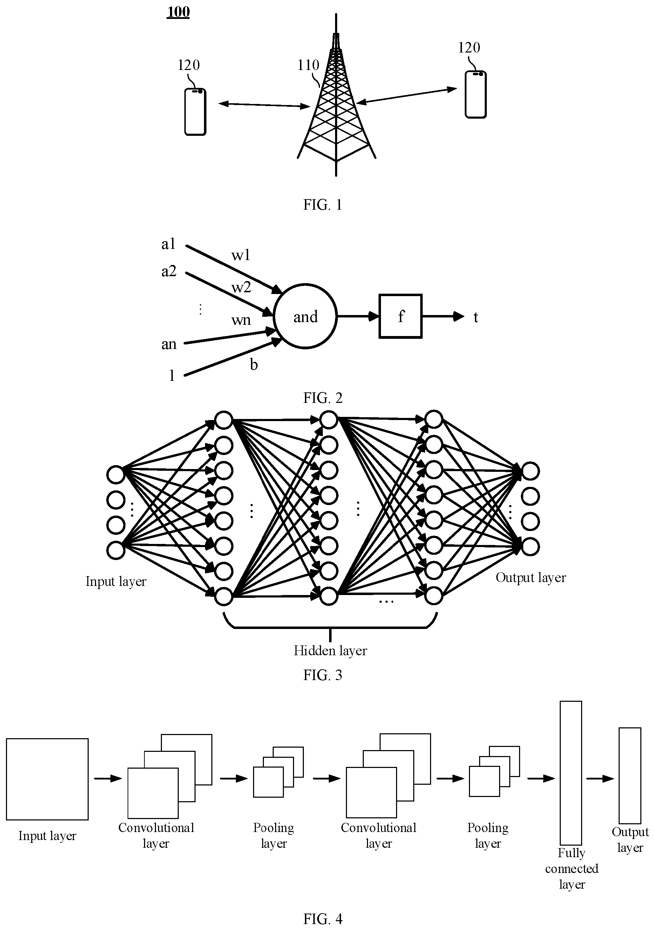

For example, a communication system 100 used in the embodiments of the present disclosure is shown in FIG. 1. The communication system 100 may include a network device 110, the network device 110 may be a device for communicating with terminal devices 120 (or referred to as a communication terminal or a terminal). The network device 110 may provide a communication coverage for a specific geographical area and may communicate with terminal devices located within the coverage area.

FIG. 1 exemplarily shows a network device and two terminal devices. In some embodiments, the communication system 100 may include multiple network devices and there are other numbers of terminal devices within the coverage area of each network device, which is not limited in the embodiments of the present disclosure.

In some embodiments, the communication system 100 may also include other network entities such as a network controller and a mobility management entity, which are not limited in the embodiments of the present disclosure.

It should be understood that a device with communication functions in a network/system in the embodiments of the present disclosure may be referred to as a communication device. Taking the communication system 100 shown in FIG. 1 as an example, the communication device may include a network device 110 and terminal devices 120 with communication functions. The network device 110 and the terminal devices 120 may be the specific devices described above, which will not be repeated herein; the communication device may also include other devices in the communication system 100, such as a network controller, a mobile management entity and other network entities, which are not limited in the embodiments of the present disclosure.

It should be understood that terms "system" and "network" are often used interchangeably herein. The term "and/or" herein is used to describe an association relationship between associated objects, for example, to indicate that there may be three relationships between the related objects. For example, "A and/or B" may represent: A exists alone, both A and B exist, and B exists alone. In addition, the character "/" herein generally indicates that related objects before and after this character are in an "or" relationship.

It should be understood that a first communication device and a second communication device are involved in the present disclosure. The first communication device may be a terminal device, such as a mobile phone, a machine facility, a customer premise equipment (CPE), an industrial device, a vehicle. The second communication device may be a peer communication device of the first communication device, such as a network device, a mobile phone, an industrial device, a vehicle. In the embodiments of the present disclosure, the first communication device may be a terminal device, and the second communication device may be a network device (i.e., uplink communication or downlink communication); or, the first communication device may be a first terminal, and the second communication device may be a second terminal (i.e., sidelink communication).

The terms used in the implementation section of the present disclosure are only used to explain the specific embodiments of the present disclosure and are not intended to limit the present disclosure. The terms "first", "second", "third", "fourth" and the like in the specification, claims and drawings of the present disclosure are used to distinguish different objects rather than to describe a specific order. In addition, the terms "include" "comprise" and "have" and any variations thereof, are intended to cover a non-exclusive inclusion.

It should be understood that the "indicate" mentioned in the embodiments of the present disclosure and any variations thereof may mean a direct indication or an indirect indication, or represent that there is an association relationship. For example, A indicating B may mean that A directly indicates B, e.g., that B may be acquired through A; or may mean that A indirectly indicates B, e.g., that A indicates C, and B may be acquired through C; or may mean that there is an association relationship between A and B.

The term "correspond" and any variations thereof described in the embodiments of the present disclosure may mean a relationship of direct or indirect correspondence between the two, or a relationship of association between the two, or a relationship of indicating and being indicated, or configuring and being configured, or the like.

In the embodiments of the present disclosure, "predefinition" or "preconfiguration" may be achieved by pre-saving corresponding codes, tables or other methods that may be used to indicate related information in a device (for example, including a terminal device and a network device), of which the specific implementations are not limited in the present disclosure. For example, predefinition may refer to what is defined in the protocol.

In the embodiments of the present disclosure, the "protocol" may refer to a standard protocol in the communication field, which, for example, may be an evolution of an existing LTE protocol, an NR protocol, a Wi-Fi protocol, or a protocol related to other communication systems. The present disclosure does not limit the protocol type.

In order to better understand the embodiments of the present disclosure, the neural network and machine learning related to the present disclosure are explained.

A neural network (NN) is a computing model consisting of multiple interconnected neuron nodes, where connections between nodes represent weighted values from the input signals to the output signals, called the weights; each node performs weighted summation (SUM) on different input signals and performs outputting through a specific activation function (f). FIG. 2 is a schematic diagram of a neuron structure, where a1, a2, ..., and an represent input signals, w1, w2, ..., and wn represent weights, f represents an activation function, and t represents an output.

A simple neural network is shown in FIG. 3, and includes an input layer, a hidden layer, and an output layer. Different outputs may be generated through different connection manners, weights, and activation functions of multiple neurons, thereby fitting the mapping relationship from input to output. Each upper-level node is connected to all its lower-level nodes. This neural network is a fully connected neural network, which may also be called a deep neural network (DNN).

The basic structure of a convolutional neural network (CNN) includes: an input layer, multiple convolutional layers, multiple pooling layers, a fully connected layer and an output layer, as shown in FIG. 4. Each neuron of the convolution kernel in the convolution layer is locally connected to its inputs, and the pooling layer is introduced to extract the local maximum or average value features of a certain layer, which effectively reduces the parameters of the network and mines the local features, so that the convolutional neural network can converge quickly and obtain excellent performance.

Deep neural network with multiple hidden layers is used in deep learning, which greatly improves the network's ability to learn features and may fit complex nonlinear mappings from input to output. Therefore, it is widely used in speech and image processing fields. In addition to deep neural networks, deep learning also includes common basic structures such as convolutional neural networks (CNN) and recurrent neural networks (RNN) for different tasks.

The basic structure of a convolutional neural network includes: an input layer, multiple convolutional layers, multiple pooling layers, a fully connected layer and an output layer, as shown in FIG. 4. Each neuron of the convolution kernel in the convolution layer is locally connected to its inputs, and the pooling layer is introduced to extract the local maximum or average value features of a certain layer, which effectively reduces the parameters of the network and mines the local features, so that the convolutional neural network can converge quickly and obtain excellent performance.

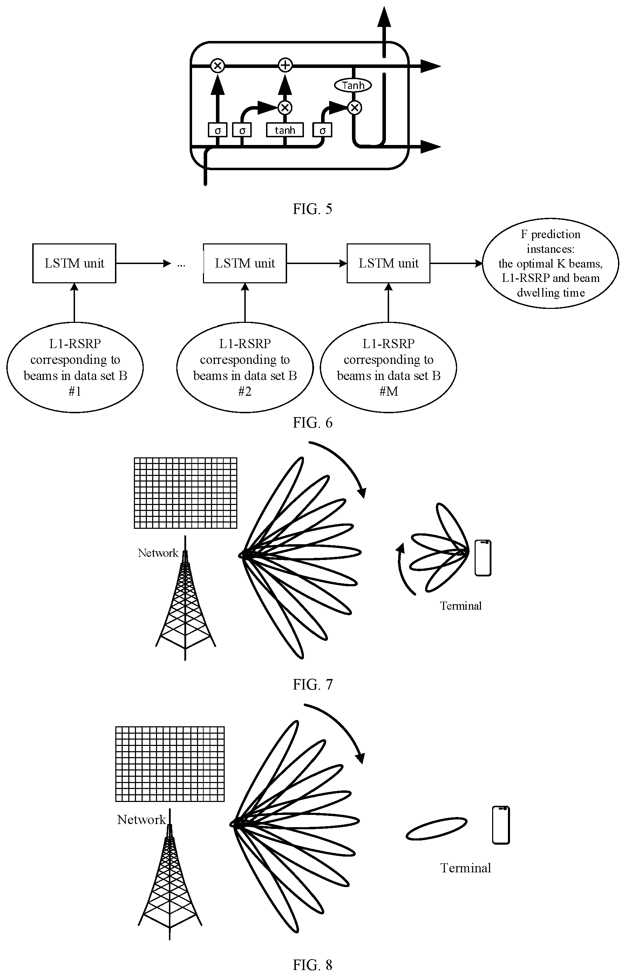

RNN is a neural network that models sequential data and has achieved remarkable results in natural language processing such as machine translation, speech recognition and other applications. Specifically, the network device memorizes information of past moments and uses the information in the calculation of the current output, that is, the nodes between the hidden layers are no longer disconnected but connected, and the input of the hidden layer includes not only the input layer but also the output of the hidden layer at the previous moment. Commonly used RNNs include structures such as long short-term memory (LSTM) and gated recurrent unit (GRU). FIG. 5 shows a basic LSTM unit structure, which may include a tanh activation function, and is different from the RNN, which only considers the most recent state, the cell state of LSTM determines which states should be retained and which states should be forgotten, thereby solving the defects of traditional RNN in long-term memory.

In order to facilitate a better understanding of the embodiments of the present disclosure, the beam management related to the present disclosure is explained.

In the NR system, millimeter wave frequency band communications are introduced, and corresponding beam management mechanisms are also introduced, including beam management that may be divided into uplink and downlink (i.e., downlink beam management and uplink beam management). The downlink beam management includes downlink beam sweeping, optimal beam reporting on a UE side, downlink beam indication on a network side, and other processes.

The downlink beam sweeping process may refer to that: the network device sweeps different transmission beam directions through a downlink reference signal. The UE may use different receiving beams for measurement, so that all beam pairs may be traversed. The UE calculates a layer 1 reference signal receiving power (L1-RSRP) value corresponding to each beam pair.

The downlink reference signal includes a synchronization signal block (SSB) and/or a channel state information reference signal (CSI-RS).

To facilitate a better understanding of the embodiments of the present disclosure, the beam management based on artificial intelligence (AI)/machine learning (ML) related to the present disclosure is described.

The beam management based on AI/ML may be downlink beam prediction in both spatial domain and temporal domain.

Spatial domain beam prediction (also called beam management case 1 (BM-Case 1)): the downlink beam prediction in spatial domain is performed in data set A (Set A) through beams in measurement data set B (Set B). Set B is either a subset of Set A, or Set B and Set A are two different beam sets. Set B may be understood as a partial subset of the beams (pairs); Set A may be understood as the full set of the beams (pairs).

Time domain beam prediction (also called beam management case 2 (BM-Case2)): the downlink beam prediction in time domain is performed in data set A (Set A) through beams in historical measurement data set B (Set B). Set B is either a subset of Set A, the same as Set A, or a subset of Set A. Set B may be understood as a partial subset of the beams (pairs); Set A may be understood as the full set of the beams (pairs).

In order to better understand the embodiments of the present disclosure, the neural network model related to the present disclosure is explained.

A neural network (NN) model may be trained and obtained through processes of constructing, training, verification and testing of data sets. In the present disclosure, it is assumed that the NN models have been trained in advance through offline training or online training. It should be noted that the offline training and the online training are not mutually exclusive. First, the network (NW) may obtain a static training result through the offline training of the data set, which may be called offline training herein. During the usage of the NN model by the network (NW) or the terminal (UE), with further measurements and/or reporting from the UE, the NN model may continue to collect more data and perform real-time online training to optimize parameters of the NN model to achieve better inference and prediction results.

Taking the prediction of time domain beams (pairs) and performance thereof as an example in the present disclosure, the LSTM model is selected, as shown in FIG. 6. In terms of time sequence, the LSTM model may be understood as extending M instances as inputs, which is equivalent to a cascade of M LSTM units. The input(s) of each LSTM unit is/are L1-RSRP of the beam (pair) of instance m (Set Bm) in Set B, where 1≤m≤M.

It should be noted that an index of the beam (pair) of Set Bm may be implicitly input through the fixed sorting manner of L1-RSRP. After completing the performance input of M instances, the LSTM model may predict the optimal beam (pair) (i.e., top beam (pair)) in the next F instances, the performance (i.e., link quality information) of the optimal beam (pair), and the dwelling time of the optimal beam (pair).

In order to better understand the embodiments of the present disclosure, the beam management of the NR related to the present disclosure is explained.

In the NR system, millimeter wave frequency band communications are introduced, that is, the beam management mechanisms are introduced. For example, the beam management mechanisms include uplink beam management and downlink beam management. The downlink beam management mechanism includes downlink beam sweeping, UE beam measurement and reporting (measurement & reporting), network device downlink beam indication, and other processes.

The downlink beam sweeping process may include three processes, i.e., P1, P2 and P3 processes. The P1 process refers to that the network device sweeps different transmission beams and the UE sweeps different receiving beams; the P2 process refers to that the network device sweeps different transmission beams and the UE uses the same receiving beam; the P3 process refers to that the network device uses the same transmission beam and the UE sweeps different receiving beams. Generally, the network device completes the above beam sweeping process by transmitting a downlink reference signal. Optionally, the downlink reference signal may include but is not limited to a synchronization signal block (SSB) and/or a channel state information reference signal (CSI-RS).

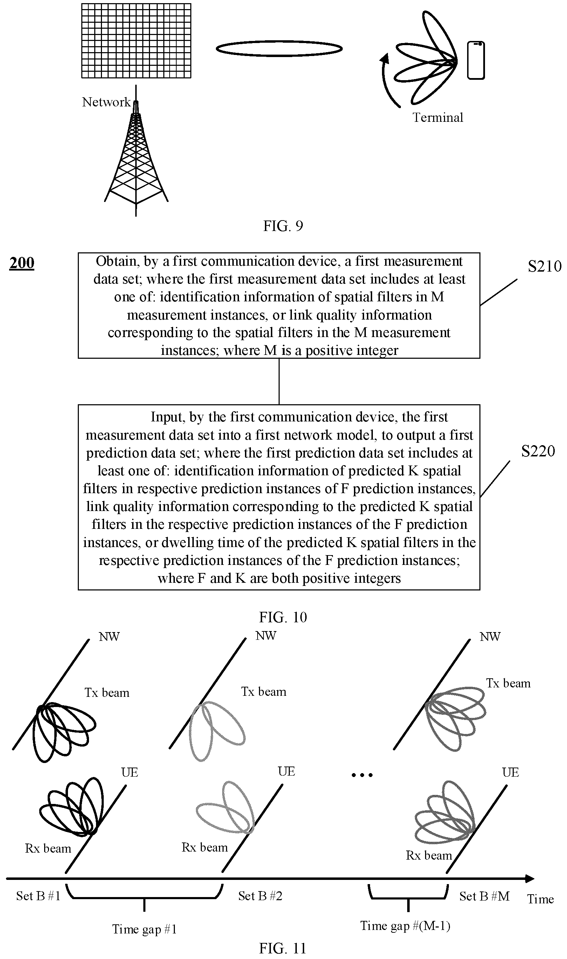

FIG. 7 is a schematic diagram of the P1 process (or the downlink full sweeping process), FIG. 8 is a schematic diagram of the P2 process, and FIG. 9 is a schematic diagram of the P3 process.

As shown in FIG. 7, in the P1 process, the network device traverses all transmission beams to transmit the downlink reference signals, and the UE side traverses all receiving beams to perform measurements to determine corresponding measurement results.

As shown in FIG. 8, in the P2 process, the network device traverses all transmission beams to transmit the downlink reference signals, and the UE side uses a specific receiving beam to perform measurements to determine corresponding measurement results.

As shown in FIG. 9, in the P3 process, the network device may use a specific transmission beam to transmit the downlink reference signal, and the UE side traverses all receiving beams to perform measurements to determine corresponding measurement results.

Traditional beam reporting in the NR means that the UE measures L1-RSRP values of different beams (pairs), selects the K transmission beams with the highest L1-RSRP, which is reported to the NW in a form of uplink control information (UCI). Herein, L1-RSRP may also be replaced by other beam link indicators, such as layer 1 signal to interference plus noise ratio (L1-SINR), layer 1 reference signal received quality (L1-RSRQ), etc.

After the optimal beams reported by the terminal device is obtained, the network device may carry a transmission configuration indicator (TCI) status (which includes the transmission beam using the downlink reference signal as a reference) through a media access control (MAC) or a downlink control information (DCI) signaling to complete beam indication to the UE. The UE uses the receiving beam corresponding to the transmission beam for downlink reception.

In order to facilitate a better understanding of the embodiments of the present disclosure, the problems solved by the present disclosure are explained.

For the NR beam sweeping process, if it is a downlink periodic full-beam sweeping process, i.e.,, a periodic P1 process, the UE needs to periodically traverse all combinations of transmission beams and receiving beams, which will incur substantial overhead and delay. For example, it is assumed that NW deploys 64 different downlink transmission directions in FR2 (carried by up to 64 SSBs), and the UE uses multiple antenna panels (including only one receiving beam panel) to simultaneously perform receiving beam sweeping upon receiption, and each antenna panel has 4 receiving beams. From a time perspective, each SSB periodicty is approximately 20ms, so four SSB periodicities are required to complete the measurement of four receiving beams (assuming that multiple receiving antenna panels may perform beam sweeping), which means that at least 80ms are required.

The above process is repeated every 80 milliseconds (ms). During each 80-millisecond periodicty, the UE needs to measure at least 64*4 = 256 beam pairs, which corresponds to a downlink resource overhead of 256 resources.

Therefore, how to reduce the overhead and delay of beam sweeping is an urgent problem to be solved. Based on this problem, the present disclosure proposes a time domain beam prediction solution based on an AI/ML model, which is beneficial to reduce the overhead and delay caused by the beam sweeping process.

To facilitate understanding of the technical solutions of the embodiments of the present disclosure, the technical solutions of the present disclosure are described in detail below through specific embodiments. The following related technologies as optional solutions may be arbitrarily combined with the technical solutions of the embodiments of the present disclosure, which all belong to the protection scope of the embodiments of the present disclosure. The embodiments of the present disclosure include at least part of the following contents.

FIG. 10 is a schematic flowchart of a wireless communication method 200 according to the embodiments of the present disclosure. As shown in FIG. 10, the wireless communication method 200 may include at least part of the following contents.

S210, the first communication device acquires a first measurement data set; where the first measurement data set includes at least one of: identification information of spatial filters in M measurement instances, or link quality information corresponding to the spatial filters in the M measurement instances; where M is a positive integer.

S220, the first communication device inputs the first measurement data set into a first network model, to output a first prediction data set; where the first prediction data set includes at least one of: identification information of predicted K spatial filters in respective prediction instances of F prediction instances, link quality information corresponding to the predicted K spatial filters in the respective prediction instances of the F prediction instances, or dwelling time of the predicted K spatial filters in the respective prediction instances of the F prediction instances; where F and K are both positive integers.

In some embodiments of the present disclosure, a spatial filter may also be referred to as a beam, a beam pair, a spatial relation, a spatial setting, a spatial domain filter, or a reference signal.

In some embodiments, the spatial filter includes a transmission spatial filter. Optionally, the transmission spatial filter may also be referred to as a transmission beam (Tx beam) or a transmitting-end spatial domain filter, and the above terms may be interchangeable.

In some embodiments, the spatial filter includes a receiving spatial filter. Optionally, the receiving spatial filter may also be referred to as a transmission beam (Rx beam) or a receiving-end spatial domain filter, and the above terms may be interchangeable.

In some embodiments, the spatial filter includes a transmission spatial filter and a receiving spatial filter. Optionally, a combination of a transmission spatial filter and a receiving spatial filter may also be referred to as a beam pair, a spatial filter pair, or a spatial filter group, and the above terms may be interchangeable.

In some embodiments, identification information of the spatial filter may be an index or an identifier of the spatial filter.

For example, identification information of the transmission spatial filter may be an index or an identifier of the transmission spatial filter.

For another example, identification information of the receiving spatial filter may be an index or an identifier of the receiving spatial filter.

For yet another example, identification information of the combination of the transmission spatial filter and the receiving spatial filter may be a combination index.

In some embodiments, the link quality information may include, but is not limited to, at least one of:
layer1 reference signal receiving power (L1-RSRP), layer1 reference signal receiving quality (L1-RSRQ), or layer1 signal to interference plus noise ratio (L1-SINR).

In some embodiments, a measurement instance may correspond to one or more time units, where the time unit may include but is not limited to one of: a slot, a mini slot, a frame, a subframe, a symbol, a millisecond, or a microsecond.

In some embodiments, a prediction instance may correspond to one or more time units, where the time unit may include but is not limited to one of: a slot, a mini slot, a frame, a subframe, a symbol, a millisecond, or a microsecond.

In some embodiments, the K spatial filters are determined based on link quality information in respective prediction instances.

Specifically, for example, K spatial filters are obtained based on an order of link quality information in respective prediction instances from high to low. For example, the spatial filters corresponding to the first K pieces of link quality information in the order of link quality information from high to low in respective prediction instances are the K spatial filters in the prediction instance.

Specifically, for another example, the K spatial filters are spatial filters corresponding to link quality information, whose link quality information in respective prediction instances is greater than or equal to a first threshold. Optionally, the first threshold is agreed by a protocol, or the first threshold is configured by a network device.

In some embodiments, a value of K includes but is not limited to one of: 1, 2, 4, 8.

In some embodiments, the dwelling time of the K spatial filters may be time during which the link quality information corresponding to the K spatial filters remains stable.

In some embodiments, in a case where the first measurement data set only includes link quality information corresponding to the spatial filters in M measurement instances, the identification information of the spatial filters in the M measurement instances may be implicitly indicated by the link quality information corresponding to the spatial filters in the M measurement instances.

In some embodiments, the first communication device is a terminal device, or the first communication device is a network device.

In some embodiments, the first network model may be an LSTM model. As shown in FIG. 6, the LSTM model may be understood in terms of time sequence as extending M measurement instances as an input, which is equivalent to a cascade of M LSTM units. An input of each LSTM unit is link quality information (e.g., L1-RSRP) of a beam (pair) of the measurement instance m (Set Bm) in data set B (i.e., the first measurement data set), where 1 ≤m≤M.

In some embodiments, the spatial filters in the respective measurement instances of the M measurement instances are partial spatial filters of all spatial filters. Specifically, the all spatial filters refer to all deployed spatial filters. That is, in respective measurement instances, not all deployed spatial filters are traversed. For example, assuming that a network device (NW) deploys 64 different downlink transmission beams (Tx beams) in FR2, numbers of downlink transmission beams in respective measurement instances of the M measurement instances are less than 64.

Therefore, in this embodiment, only information of partial spatial filters is measured in each measurement, and after merging M measurements, information of more spatial filters or even information of all spatial filters may be obtained for subsequent prediction, thereby reducing the overhead of each measurement.

In some embodiments, configurations of the spatial filters in the respective measurement instances of the M measurement instances are the same. That is, the spatial filters in the respective measurement instances of the M measurement instances are the same. For example, identifiers and numbers of the spatial filters in the respective measurement instances of the M measurement instances are the same.

Specifically, for example, assuming that the first measurement data set is Set B, the M measurement instances are respectively recorded as Set B #1, Set B #2, ..., Set B #M-1, and Set B #M. Transmission-receiving (Tx-Rx) beam pair indexes in Set B #1 are from index#0 to index#15, transmission-receiving (Tx-Rx) beam pair indexes in Set B #2 are also from index#0 to index#15,..., the transmission-receiving (Tx-Rx) beam pair indexes in Set B #M-1 are also from index#0 to index#15, and the transmission-receiving (Tx-Rx) beam pair indexes in Set B #M are also from index#0 to index#15.

In some embodiments, configurations of spatial filters in at least some measurement instances of the M measurement instances are different. That is, the spatial filters in at least some measurement instances of the M measurement instances are different. For example, identifiers of the spatial filters in at least some measurement instances of the M measurement instances are different. For another example, the numbers of the spatial filters in at least some measurement instances of the M measurement instances are different. For yet another example, identifiers and numbers of the spatial filters in at least some measurement instances of the M measurement instances are different.

Specifically, for example, assuming that the first measurement data set is Set B, the M measurement instances are respectively recorded as Set B #1, Set B #2, ..., Set B #M-1, and Set B #M. As shown in FIG. 11, transmission-receiving (Tx-Rx) beam pair indexes in Set B #1 are from index#0 to index#15, transmission-receiving (Tx-Rx) beam pair indexes in Set B #2 are from index#16 to index#19, ..., and transmission-receiving (Tx-Rx) beam pair indexes in Set B #M are from index#48 to index#63.

In some embodiments, partial spatial filters in different measurement instances of the M measurement instances are the same. That is, the spatial filters in different measurement instances of the M measurement instances may overlap to a certain extent. Optionally, overlapping spatial filters may be spatial filters that are easily chosen. Thus, the measurement quality may be improved.

Specifically, for different beam pairs, the possibilities of being selected are not exactly the same (generally speaking, a transmission beam with a moderate downtilt angle on the NW side is easy to be selected). Therefore, for a beam pair that is easy to be selected by UE, more measurements may be performed; for a beam pair that is not easily selected, fewer measurements may be performed, or even no measurement may be performed.

Specifically, for example, assuming that the first measurement data set is Set B, the M measurement instances are respectively recorded as Set B #1, Set B #2, ..., Set B #M-1, and Set B #M. Tx-Rx beam pair indexes in Set B #1 are from index#0 to index#15, and Tx-Rx beam pair indexes in Set B #2 are from index#14 to index#19. That is, the Tx-Rx beam pairs in Set B #1 and Set B #2 both include index #14 and index #15.

In some embodiments, the M measurement instances are set at equal gaps in time domain. That is, the M measurement instances may be periodic measurement instances. Optionally, periodicity information corresponding to the measurement instances may be configured through an RRC signaling.

In some embodiments, the M measurement instances correspond to periodic spatial filter measurements during a first duration. Optionally, periodicity information corresponding to the spatial filter measurements may be configured through an RRC signaling.

In some embodiments, the first duration is agreed by a protocol, or the first duration is configured by a network device.

In some embodiments, the M measurement instances are set at unequal gaps in time domain. For example, as shown in FIG. 11, time gaps between different measurement instances of the M measurement instances are different, which may, therefore, adapt to channel changes more flexibly.

In some embodiments, the gaps between the M measurement instances in time domain are determined based on a moving speed of a terminal device. For example, in a case where a UE moves faster, the measurement frequency may be increased (i.e., time gaps between different measurement instances are smaller); in a case where a UE moves slower, the measurement frequency may be reduced (i.e., time gaps between different measurement instances are larger), which ensures that the UE performs approximately the same number of measurements on the same moving distance.

In some embodiments, different measurement instances of the M measurement instances correspond to the same periodicity and different offsets. Specifically, for example, for measurement instances with unequal gaps in time domain, from the perspective of network configuration, for periodic measurements, the network may configure the same periodicity and different offsets for different measurement instances.

In some embodiments, the M measurement instances are measurement instances activated by downlink control information (DCI) or a media access control control control element (MAC CE) and of a plurality of semi-persistent scheduling (SPS) measurement instances.

In some embodiments, the M measurement instances are measurement instances dynamically triggered by DCI and of a plurality of pre-configured measurement instances. That is, in this embodiment, a piece of DCI may trigger an aperiodic CSI-RS of the M measurement instances. The benefit of this is that only a piece of DCI (minimal signaling overhead) may be used to trigger measurements of the M measurement instances.

In some embodiments, the M measurement instances are measurement instances corresponding to a set of measurement configurations activated by DCI or MAC CE and of a plurality of sets of measurement configurations, or the M measurement instances are measurement instances corresponding to a current measurement configuration of a plurality of sets of measurement configurations, activated by DCI or MAC CE and used in turn. Optionally, the plurality of sets of measurement configurations are configured in advance or semi-statically by a network device.

In some embodiments, the network device may configure the M measurement instances in the first measurement data set, or the network device may activate the M measurement instances in the first measurement data set, or the network device may update the M measurement instances in the first measurement data set. For example, the network device may configure a plurality of measurement instances through an RRC signaling, and activate the M measurement instances in the first measurement data set through an MAC CE signaling.

In some embodiments, assuming that the first communication device is a terminal device, the first communication device may measure the M measurement instances to obtain the first measurement data set.

In some embodiments, assuming that the first communication device is a network device, the first communication device may acquire measurement results of a terminal device for the M measurement instances to obtain the first measurement data set.

In some embodiments, the spatial filters in respective measurement instances of the F prediction instances are partial spatial filters of all spatial filters. Specifically, the all spatial filters refer to all deployed spatial filters. That is, in respective prediction instances, not all deployed spatial filters are traversed. For example, assuming that a network device (NW) deploys 64 different downlink transmission beams in FR2, numbers of downlink transmission beams in respective prediction instances of the F prediction instances are less than 64.

Specifically, in respective prediction instances, a range of predicted spatial filters may be limited, thereby controlling a range of the spatial filters that the model may select, only focusing on some key spatial filters, and improving the accuracy of the predicted spatial filters.

In some embodiments, configurations of spatial filters in respective prediction instances of the F prediction instances are the same. That is, the spatial filters in respective prediction instances of the F prediction instances are the same. For example, identifiers and numbers of the spatial filters in respective prediction instances of the F prediction instances are the same.

Specifically, for example, assuming that the first prediction data set is Set A, the F prediction instances are respectively recorded as Set A #1, Set A #2, ..., Set A #F-1, and Set A #F. Transmission-receiving (Tx-Rx) beam pair indexes in Set A #1 are from index#0 to index#20, transmission-receiving (Tx-Rx) beam pair indexes in Set A #2 are also from index#0 to index#20,..., transmission-receiving (Tx-Rx) beam pair indexes in Set A #F-1 are also from index#0 to index#20, and transmission-receiving (Tx-Rx) beam pair indexes in Set A #F are also from index#0 to index#20.

In some embodiments, configurations of spatial filters in at least some prediction instances of the F prediction instances are different. That is, the spatial filters in at least some prediction instances of the F prediction instances are different. For example, identifiers of the spatial filters in at least some prediction instances of the F prediction instances are different. For another example, numbers of spatial filters in at least some prediction instances of the F prediction instances are different. For yet another example, identifiers and numbers of the spatial filters in at least some prediction instances of the F prediction instances are different.

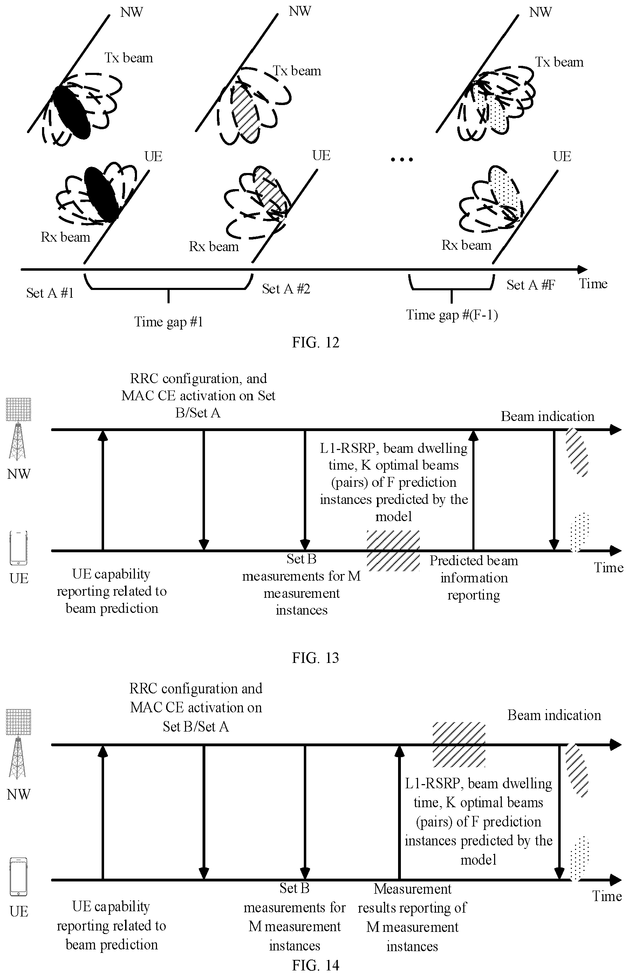

Specifically, for example, assuming that the first prediction data set is Set A, the F prediction instances are respectively recorded as Set A #1, Set A #2, ..., Set A #F-1, and Set A #F. As shown in FIG. 12, transmission-receiving (Tx-Rx) beam pair indexes in Set A #1 are from index#0 to index#35, transmission-receiving (Tx-Rx) beam pair indexes in Set A #2 are from index#0 to index#15, ..., and transmission-receiving (Tx-Rx) beam pair indexes in Set A #F are from index#0 to index#27.

In some embodiments, partial or all of the spatial filters in different prediction instances of the F prediction instances are the same. That is, the spatial filters in different prediction instances of the F prediction instances may overlap to a certain extent. Optionally, overlapping spatial filters may be spatial filters that are easily chosen. Thus, the prediction quality may be improved.

Specifically, for different beam pairs, the possibilities of being selected are not exactly the same (generally speaking, a transmission beam with a moderate downtilt angle on the NW side is easy to be selected). Therefore, for a beam pair that is easy to be selected by UE, more measurements may be performed; for a beam pair that is not easily selected, fewer measurements may be performed, or even no measurement may be performed.

In some embodiments, the F prediction instances are set at equal gaps in time domain. That is, the F prediction instances may be periodic prediction instances. Optionally, periodicity information corresponding to the prediction instances may be configured through an RRC signaling.

In some embodiments, the F prediction instances correspond to periodic spatial filter predictions during a second duration. Optionally, periodicity information corresponding to the spatial filter predictions may be configured through an RRC signaling.

In some embodiments, the second duration is agreed by a protocol, or the second duration is configured by a network device.

In some embodiments, the F prediction instances are set at unequal gaps in time domain. For example, as shown in FIG. 12, time gaps between different prediction instances of the F prediction instances are different, which may, therefore, adapt to channel changes more flexibly.

In some embodiments, the gaps between the F prediction instances in time domain are determined based on a moving speed of a terminal device. For example, in a case where the UE moves faster, the measurement frequency may be increased (i.e., time gaps between different measurement instances are smaller); in a case where the UE moves slower, the measurement frequency may be reduced (i.e., time gaps between different measurement instances are larger), which ensures that approximately the same number of times are predicted on the same moving distance.

In some embodiments, different prediction instances of the F prediction instances correspond to the same periodicity and different offsets. Specifically, for example, for prediction instances with unequal gaps in time domain, from the perspective of network configuration, for periodic predictions, the network may configure the same periodicity and different offsets for different prediction instances.

In some embodiments, the F prediction instances are prediction instances activated by DCI or MAC CEand of a plurality of SPS prediction instances.

In some embodiments, the F prediction instances are prediction instances dynamically triggered by DCI and of a plurality of pre-configured prediction instances. That is, in this embodiment, a piece of DCI may trigger F prediction instances from the plurality of pre-configured prediction instances. The benefit of this is that only a piece of DCI (minimal signaling overhead) may be used to trigger predictions of the F prediction instances.

In some embodiments, the F prediction instances are prediction instances corresponding to a set of prediction configurations activated by DCI or MAC CE and of a plurality of sets of prediction configurations, or the F prediction instances are prediction instances corresponding to a current prediction configuration of the plurality of sets of prediction configurations, activated by DCI or MAC CE and used in turn. Optionally, the plurality of sets of prediction configurations are configured in advance or semi-statically by a network device.

In some embodiments, for respective prediction instances, a first network model may infer identification information of K spatial filters and link quality information corresponding to the K spatial filters.

In some embodiments, for respective prediction instances, the first network model may infer identification information of the K spatial filters, link quality information corresponding to the K spatial filters, and dwelling time of the K spatial filters.

Specifically, for example, assuming that the spatial filter is a beam pair, for respective prediction instances, the first network model may further infer dwelling time of the optimal beam pair. For example, as shown in FIG. 12, there is a period of time between Set A #1 and Set A #2, which may be defined as time gap #1. The first network model infers the optimal K beam pairs for the prediction instance of Set A #1. The first network model may further predict the time for which the L1-RSRP of the K beam pairs remains stable. The stability herein may be defined in terms of relative quality, i.e., the beam quality ranking, e.g., the time that the Top-1 beam pair remains in the first place. The stability herein may also be defined based on the absolute quality of L1-RSRP, e.g., the time that the L1-RSRP of the Top-1 beam pair drops below a certain threshold (e.g., 3 dB). The benefit is that the dwelling time of the effective beam pair may be more carefully characterized, thereby providing the network (NW) with more beam information, so that the NW may adjust the beam in advance or later in subsequent beam indication.

In some embodiments, the network device may configure the F prediction instances in the first prediction data set, or the network device may activate the F prediction instances in the first prediction data set, or the network device may update the F prediction instances in the first prediction data set. For example, the network device may configure a plurality of prediction instances through an RRC signaling, and activate the F prediction instances in the first prediction data set through an MAC CE signaling.

In some embodiments, the first communication device transmits first information.

The first information includes at least one of: identification information of predicted K spatial filters in respective prediction instances of the F prediction instances, link quality information corresponding to the predicted K spatial filters in the respective prediction instances of the F prediction instances, or dwelling time of the predicted K spatial filters in the respective prediction instances of the F prediction instances.

That is, the first communication device may report prediction information in the F prediction instances.

Specifically, for example, the first communication device transmits the first information to a second communication device, where the first communication device is a terminal device and the second communication device is a network device. That is, after the first network model completes the spatial filter prediction in time domain, the terminal device needs to report the prediction results of the first network model in the F prediction instances to the network device.

In some embodiments, the first information is carried by one of:
uplink control information (UCI), an MAC CE signaling, or a radio resource control (RRC) signaling.

In some embodiments, the link quality information corresponding to the K spatial filters is transmitted in a differential manner.

Specifically, for example, assuming that the first prediction data set is Set A, the F prediction instances are respectively recorded as Set A #1, Set A #2, ..., Set A #F-1, Set A #F, and assuming that the spatial filter is a Tx-Rx beam pair and the link quality information is L1-RSRP. Optionally, as shown in Table 1, the terminal device may transmit prediction results of the F prediction instances to the network device via a channel state information (CSI) report, where the prediction results of the F prediction instances include 4 Tx-Rx beam pairs and L1-RSRPs corresponding to the 4 Tx-Rx beam pairs respectively. Optionally, as shown in Table 2, the terminal device may transmit the prediction results of the F prediction instances to the network device through a CSI report, where the prediction results of the F prediction instances include 4 Tx-Rx beam pairs, L1-RSRPs corresponding to the 4 Tx-Rx beam pairs respectively, and beam dwelling time of the 4 Tx-Rx beam pairs. That is, in Table 1 and Table 2, K=4. It should be understood that Table 1 and Table 2 are merely examples and do not constitute a limitation on the embodiments of the present disclosure.

Optionally, the terminal device may report the prediction results of the F prediction instances via a CSI report. That is, the terminal device may report all the contents in Table 1 or Table 2 through a CSI report.

Optionally, the terminal device may report the prediction results of the F prediction instances via multiple CSI reports. For example, the terminal device reports a prediction result of a prediction instance in each CSI report. That is, the terminal device may report the prediction results of the F prediction instances in Table 1 through F CSI reports, respectively, or the terminal device may report the prediction results of the F prediction instances in Table 2 through F CSI reports, respectively.

**Table 1 UE reports beam pair ID and L1-RSRP performance of F prediction instances**

| **CSI Report** | **CSI fields** |
|---|---|
| Set A #1 | Tx-Rx beam pair #1 |
| | Tx-Rx beam pair #2 |
| | Tx-Rx beam pair #3 |
| | Tx-Rx beam pair #4 |
| | **L1-RSRP** #1 |
| | Differential L1-RSRP #2 |
| | Differential L1-RSRP #3 |
| | Differential L1-RSRP #4 |
| Set A #2 | Tx-Rx beam pair #1 |
| | Tx-Rx beam pair #2 |
| | Tx-Rx beam pair #3 |
| | Tx-Rx beam pair #4 |
| | **L1-RSRP** #1 |
| | Differential L1-RSRP #2 |
| | Differential L1-RSRP #3 |
| | Differential L1-RSRP #4 |
| ... | ... |
| Set A #F | Tx-Rx beam pair #1 |
| | Tx-Rx beam pair #2 |
| | Tx-Rx beam pair #3 |
| | Tx-Rx beam pair #4 |
| | **L1-RSRP** #1 |
| | Differential L1-RSRP #2 |
| | Differential L1-RSRP #3 |
| | Differential L1-RSRP #4 |

It should be noted that, in the above Table 1, in a prediction instance, Differential L1-RSRP #2 is a difference relative to L1-RSRP #1, Differential L1-RSRP #3 is a difference relative to L1-RSRP #1, Differential L1-RSRP #4 is a difference relative to L1-RSRP #1, L1-RSRP #1 is the L1-RSRP corresponding to Tx-Rx beam pair #1, Differential L1-RSRP #2 is the L1-RSRP corresponding to Tx-Rx beam pair #2, Differential L1-RSRP #3 is the L1-RSRP corresponding to Tx-Rx beam pair #3, and Differential L1-RSRP #4 is the L1-RSRP corresponding to Tx-Rx beam pair #4.

**Table 2 UE reports beam pair IDs, L1-RSRP performance and beam dwelling time of F prediction instances**

| **CSI Report** | CSI fields |
|---|---|
| Set A #1 | Tx-Rx beam pair #1 |
| | Tx-Rx beam pair #2 |
| | Tx-Rx beam pair #3 |
| | Tx-Rx beam pair #4 |
| | L1-RSRP #1 |
| | Differential L1-RSRP #2 |
| | Differential L1-RSRP #3 |
| | Differential L1-RSRP #4 |
| | Beam dwelling time #1 |
| | Beam dwelling time #2 |
| | Beam dwelling time #3 |
| | Beam dwelling time #4 |
| Set A #2 | Tx-Rx beam pair #1 |
| | Tx-Rx beam pair #2 |
| | Tx-Rx beam pair #3 |
| | Tx-Rx beam pair #4 |
| | L1-RSRP #1 |
| | Differential L1-RSRP #2 |
| | Differential L1-RSRP #3 |
| | Differential L1-RSRP #4 |
| | Beam dwelling time #1 |
| | Beam dwelling time #2 |
| | Beam dwelling time #3 |
| | Beam dwelling time #4 |
| ... | ... |
| Set A #F | Tx-Rx beam pair #1 |
| | Tx-Rx beam pair #2 |
| | Tx-Rx beam pair #3 |
| | Tx-Rx beam pair #4 |
| | L1-RSRP #1 |
| | Differential L1-RSRP #2 |
| | Differential L1-RSRP #3 |
| | Differential L1-RSRP #4 |
| | Beam dwelling time #1 |
| | Beam dwelling time #2 |
| | Beam dwelling time #3 |
| | Beam dwelling time #4 |

It should be noted that, in the above Table 2, in a prediction instance, Differential L1-RSRP #2 is a difference relative to L1-RSRP #1, Differential L1-RSRP #3 is a difference relative to L1-RSRP #1, and Differential L1-RSRP #4 is a difference relative to L1-RSRP #1; L1-RSRP #1 is the L1-RSRP corresponding to Tx-Rx beam pair #1, Differential L1-RSRP #2 is the L1-RSRP corresponding to Tx-Rx beam pair #2, Differential L1-RSRP #3 is the L1-RSRP corresponding to Tx-Rx beam pair #3, and Differential L1-RSRP #4 is the L1-RSRP corresponding to Tx-Rx beam pair #4; Beam dwelling time #1 is the beam dwelling time of Tx-Rx beam pair #1, Beam dwelling time #2 is the beam dwelling time of Tx-Rx beam pair #2, Beam dwelling time #3 is the beam dwelling time of Tx-Rx beam pair #3, and Beam dwelling time #4 is the beam dwelling time of Tx-Rx beam pair #4.

In some embodiments, the first communication device receives second information determined based on the first information.

The second information is used to indicate the identification information of the spatial filters used in respective prediction instances of the F prediction instances, or the second information is used to indicate identification information of spatial filters used in an i-th prediction instance; or the second information is used to indicate identification information and dwelling time of the spatial filters used in respective prediction instances of the F prediction instances, or the second information is used to indicate identification information and dwelling time of spatial filters used in the i-th prediction instance.

Herein, i is a positive integer, and 1≤i≤F.

That is, the first communication device may acquire the identification information of the spatial filters used in the prediction instance(s) through the second information, or the first communication device may obtain the identification information and dwelling time of the spatial filters used in the prediction instance(s) through the second information.

Specifically, in a case where the first prediction data set includes the dwelling time of the predicted K spatial filters in the respective prediction instances of the F prediction instances, the second information is used to indicate the identification information and dwelling time of the spatial filters used in respective prediction instances of the F prediction instances, or the second information is used to indicate the identification information and dwelling time of the spatial filters used in the i-th prediction instance.

Specifically, for example, the first communication device receives the second information transmitted by the second communication device, where the first communication device is a terminal device and the second communication device is a network device. That is, the network device may perform beam indication based on the prediction results of the first network model reported by the terminal device.

In some embodiments, the second information is carried by one of:
downlink control information (DCI), or an MAC CE signaling.

Specifically, based on the prediction results of the F prediction instances reported by the terminal device, there are at least two manners of the beam indication for the network device. The first manner is that the network device performs beam indication in batches according to the reporting of the terminal device. For example, under the beam prediction of F prediction instances, F times of beam information indications are performed, that is, the beams used in respective prediction instances of the F prediction instances are indicated respectively; where the beam information may be an index of the beam pair or an index of the transmission beam in the beam pair (in NR, it is generally referred to by the resource index of SSB or CSI-RS). Another manner is to perform a one-time beam indication, that is, the network device indicates the beam information of the F prediction instances to the terminal device at a time, that is, indicates the beams used in respective prediction instances of the F prediction instances at a time. The benefit of the one-time beam indication is that the signaling overhead of beam indication may be greatly reduced.

Specifically, for example, if the beam reporting of the UE does not include the beam dwelling time, the NW indicates the beam information used in respective prediction instances of the F prediction instances at a time. If the beam information is Tx-Rx beam pair index(s), then the MAC CE or DCI should include Tx-Rx beam pair index #1, Tx-Rx beam pair index #2, ..., and Tx-Rx beam pair index #F. If the beam information is a Tx beam index, then the MAC CE or DCI should include Tx beam index (CSI-RS/SSB) #1, Tx beam index (CSI-RS/SSB) #2, ..., Tx beam index (CSI-RS/SSB) #F. What this means in time domain is that whenever a prediction instance arrives, the NW will change to the indicated transmission beam, and the UE should also change the corresponding receiving beam.

Specifically, for example, if the beam reporting of the UE includes the beam dwelling time, the NW may select to indicate the beam information and beam dwelling time used in respective prediction instances of the F prediction instances to the UE at a time. If the beam information is a Tx-Rx beam pair index, then the MAC CE or DCI (i.e., the second information) should include (Tx-Rx beam pair index #1, Application time #1), (Tx-Rx beam pair index #2, Application time #2), ..., (Tx-Rx beam pair index #F, Application time #F). If the beam information is a Tx beam index, then the MAC CE or DCI (i.e., the second information) should include (Tx beam index (CSI-RS/SSB) #1, Application time #1), (Tx beam index (CSI-RS/SSB) #2, Application time #2), ..., (Tx beam index (CSI-RS/SSB) #F, Application time #F). What this means in time domain is that each indicated beam pair takes effect from the predicted instance, and effective duration of the indicated beam pair is the beam dwelling time indicated by the application time.

In some embodiments, the first communication device transmits first capability information.

The first capability information includes at least one of: a maximum number of spatial filters supported by the first measurement data set, a maximum number of measurement instances supported by the first measurement data set, a maximum number of spatial filters supported by the first prediction data set, a maximum number of prediction instances supported by the first prediction data set, whether to support prediction and reporting of the dwelling time of the spatial filters, or whether to support identification information of indicating the spatial filters in the plurality of prediction instances at a time.

Specifically, for example, the first communication device transmits the first capability information to the second communication device, where the first communication device is a terminal device and the second communication device is a network device.

That is, the terminal device may report the first capability information, and the network device may configure, activate or update the M measurement instances and/or the F prediction instances based on the first capability information, and/or the network device may indicate the identification information of the spatial filters used in respective prediction instances of the F prediction instances based on the first capability information.

In some embodiments, the first capability information may be carried by one of: UCI, an MAC CE signaling, or an RRC signaling.

For example, the first measurement data set is Set B, the first prediction data set is Set A, and the terminal device may report the following capability information:
spatial domain capacity of Set B: a maximum number of supported beam pair measurement(s) (at a time);
time domain capacity of Set B: a maximum number of supported measurement instances;
spatial domain capacity of Set A: a maximum number of supported beam pair predictions (at a time);
time domain capacity of Set A: a maximum number of supported prediction instances;
whether to support prediction and reporting of beam dwelling time;
whether to support one-time beam information indication.

In some embodiments, in a case where the first communication device is a terminal device (UE), the signaling interaction process between the network device (NW) and the terminal device (UE) to complete the time domain beam prediction may be as shown in FIG. 13, which includes the capability reporting of the UE, configuration and activation of the beam measurement set (Set B) and the beam prediction set (Set A) by the NW, the measurements of the beam measurement set by the UE, the inference of the beam prediction set using the first network model by the UE, reporting the prediction results by the UE, the indication of the beam used in the prediction instance by the NW, and other processes. It should be noted that the beam measurement set (Set B) is the above-mentioned first measurement data set, and the beam prediction set (Set A) is the above-mentioned first prediction data set.

In some embodiments, the first communication device transmits third information.

The third information is used to indicate the identification information of the spatial filters used in respective prediction instances of the F prediction instances, or the third information is used to indicate the identification information of the spatial filters used in the i-th prediction instance; or the third information is used to indicate the identification information and dwelling time of the spatial filters used in respective prediction instances of the F prediction instances, or the third information is used to indicate identification information and dwelling time of the spatial filters used in the i-th prediction instance;
where, i is a positive integer, and 1 ≤i≤F.

That is, the first communication device may indicate the identification information of the spatial filters used in the prediction instances through the third information.

Specifically, in a case where the first prediction data set includes the dwelling time of predicted K spatial filters in respective prediction instances of the F prediction instances, the third information is used to indicate identification information and dwelling time of the spatial filters used in respective prediction instances of the F prediction instances, or the third information is used to indicate the identification information and dwelling time of the spatial filters used in the i-th prediction instance.

Specifically, for example, the first communication device transmits the third information to the second communication device, where the first communication device is a network device and the second communication device is a terminal device. That is, the network device may perform beam indication based on the prediction results of the first network model.

In some embodiments, the third information is carried via one of: DCI, or an MAC CE signaling.

Specifically, based on the prediction results of the F prediction instances predicted by the network device, there are at least two manners of the beam indication for the network device. The first manner is that the network device performs beam indication in batches according to the prediction results. For example, under the beam prediction of F prediction instances, F times of beam information indications are performed, that is, beams used in respective prediction instances of the F prediction instances are indicated respectively; where the beam information may be an index of the beam pair or an index of the transmission beam in the beam pair (in NR, it is generally referred to by the resource index of SSB or CSI-RS). Another manner is to perform a one-time beam indication, that is, the network device indicates the beam information of the F prediction instances to the terminal device at a time, that is, indicates the beams used in respective prediction instances of the F prediction instances at a time. The benefit of the one-time beam indication is that the signaling overhead of beam indication may be greatly reduced.

Specifically, for example, if the prediction results of the prediction instances predicted by the network device do not include the beam dwelling time, the network device indicates the beam information used in respective prediction instances of the F prediction instances at a time. If the beam information is the Tx-Rx beam pair index(s), then the MAC CE or DCI (i.e., the third information) should include Tx-Rx beam pair index #1, Tx-Rx beam pair index #2, ..., and Tx-Rx beam pair index #F. If the beam information is the Tx beam index, then the MAC CE or DCI (i.e., the third information) should include Tx beam index (CSI-RS/SSB) #1, Tx beam index (CSI-RS/SSB) #2, ..., Tx beam index (CSI-RS/SSB) #F. What this means in time domain is that whenever a prediction instance arrives, the NW will change to the indicated transmission beam, and the UE should also change the corresponding receiving beam.

Specifically, for example, if the prediction results of the prediction instances predicted by the network device include the beam dwelling time, the network device may select to indicate the beam information and beam dwelling time used in respective prediction instances of the F prediction instances to the UE at a time. If the beam information is the Tx-Rx beam pair index, then the MAC CE or DCI (i.e., the third information) should include (Tx-Rx beam pair index #1, Application time #1), (Tx-Rx beam pair index #2, Application time #2), ..., (Tx-Rx beam pair index #F, Application time #F). If the beam information is the Tx beam index, then the MAC CE or DCI (i.e., the third information) should include (Tx beam index (CSI-RS/SSB) #1, Application time #1), (Tx beam index (CSI-RS/SSB) #2, Application time #2), ..., (Tx beam index (CSI-RS/SSB) #F, Application time #F). What this means in time domain is that each indicated beam pair takes effect from the predicted instance, and effective duration of the indicated beam pair of the indicated beam pair is the beam dwelling time indicated by the application time.

In some embodiments, the first communication device receives the first capability information.

The first capability information includes at least one of: a maximum number of spatial filters supported by the first measurement data set, a maximum number of measurement instances supported by the first measurement data set, a maximum number of spatial filters supported by the first prediction data set, a maximum number of prediction instances supported by the first prediction data set, whether to support prediction and reporting of the dwelling time of the spatial filters, or whether support identification information of indicating the spatial filters in the plurality of prediction instances at a time.

Specifically, for example, the first communication device receives the first capability information transmitted by the second communication device, where the first communication device is a network device and the second communication device is a terminal device.

That is, the terminal device may report the first capability information, and the network device may configure, activate or update the M measurement instances and/or the F prediction instances based on the first capability information, and/or the network device may indicate the identification information of the spatial filters used in respective prediction instances of the F prediction instances based on the first capability information.

In some embodiments, the first capability information may be carried by one of: UCI, an MAC CE signaling, or an RRC signaling.

Specifically, for example, the first measurement data set is Set B, the first prediction data set is Set A, and the terminal device may report the following capability information:
spatial domain capacity of Set B: a maximum number of supported beam pairs (at a time);
time domain capacity of Set B: a maximum number of supported measurement instances;
spatial domain capacity of Set A: a maximum number of supported beam pair predictions(at a time);
time domain capacity of Set A: a maximum number of supported prediction instances;
whether to support prediction and reporting of beam dwelling time;
whether to support one-time beam information indication.

In some embodiments, in a case where the first communication device is a network device (NW), assuming that the first measurement data set is Set B, the UE needs to measure the M measurement instances in Set B, and then report all measurement results to the model on the NW side. The specific reporting manner is described in Example 1 and Example 2.

Example 1: reporting is performed according to the time domain order in Set B m, 1<= m <= M. In respective measurement instances, reporting is performed in the order of the configured Tx-Rx beam pairs, as shown in Table 3. Herein, only the corresponding L1-RSRP or other performance indicators need to be reported.

**Table 3 UE reports L1-RSRP value according to the time domain order of Set B**

| CSI **Report** | **CSI** fields |
|---|---|
| Set B #1 | L1-RSRP #1 of Tx-Rx beam pair |
| | L1-RSRP #2 of Tx-Rx beam pair |
| | ... |
| | L1-RSRP # Size (Set B #1) of Tx-Rx beam pair |
| Set B #2 | L1-RSRP #1 of Tx-Rx beam pair |
| | L1-RSRP #2 of Tx-Rx beam pair |
| | ... |
| | L1-RSRP # Size (Set B #2) of Tx-Rx beam pair |
| | ... |
| Set B #M | L1-RSRP #1 of Tx-Rx beam pair |
| | L1-RSRP #2 of Tx-Rx beam pair |
| | ... |
| | L1-RSRP # Size (Set B #M) of Tx-Rx beam pair |

Example 2: sorting is performed according to the performance (e.g., L1-RSRP) of respective Tx-Rx beam pairs in Set B, generally in descending order of performance. As shown in Table 4, the first is Tx-Rx beam pair ID in Set B, and then is the absolute value of the performance of the highest beam pair, e.g., the absolute value quantization of L1-RSRP. For the performance of the beam pair that is not the highest performance, it may be quantified in a differential manner, that is, the difference in performance compared to the highest performance is reported.

**Table 4 UE reports L1-RSRP value according to the time domain order of Set B**

| CSI **Report** | CSI fields |
|---|---|
| Set B #1 | Tx-Rx beam pair #1 |
| | Tx-Rx beam pair #2 |
| | ... |
| | Tx-Rx beam pair # Size(Set B #1) |
| | L1-RSRP #1 |
| | Differential L1-RSRP #2 |
| | ... |
| | Differential L1-RSRP #Size (Set B #1) |
| Set B #2 | Tx-Rx beam pair #1 |
| | Tx-Rx beam pair #2 |
| | ... |
| | Tx-Rx beam pair # Size (Set B #2) |
| | L1-RSRP #1 |
| | Differential L1-RSRP #2 |
| | ... |
| | Differential L1-RSRP #Size (Set B #2) |
| | ... |
| Set B #M | Tx-Rx beam pair #1 |
| | Tx-Rx beam pair #2 |
| | ... |
| | Tx-Rx beam pair # Size (Set B #M) |
| | L1-RSRP #1 |
| | Differential L1-RSRP #2 |
| | ... |
| | Differential L1-RSRP #Size (Set M) |

It should be noted that, in the above Table 4, in a prediction instance, Differential L1-RSRP #2 is a difference relative to L1-RSRP #1, Differential L1-RSRP #3 is a difference relative to L1-RSRP #1, and Differential L1-RSRP #4 is a difference relative to L1-RSRP #1.

In some embodiments, in a case where the first communication device is a network device (NW), the signaling interaction process between the network device (NW) and the terminal device (UE) to complete the time domain beam prediction may be as shown in FIG. 14, which includes capability reporting of the UE, configuration and activation of the beam measurement set (Set B) and the beam prediction set (Set A) by the NW, measurements of the beam measurement set by the UE, reporting measurements results of the beam measurement set by the UE, inference of the beam prediction set using the first network model by the network device, the indication of beams used in the prediction instance by the NW, and other processes. It should be noted that the beam measurement set (Set B) is the above-mentioned first measurement data set, and the beam prediction set (Set A) is the above-mentioned first prediction data set.

The technical solutions of the present disclosure are described in detail below through Embodiment 1 and Embodiment 2.

In Embodiment 1, the model is deployed on the UE side, for transmission (Tx) beam prediction. The first measurement data set is Set B, and the M measurement instances are respectively recorded as Set B #1, Set B #2, ..., Set B #M-1, and Set B #M. The first prediction data set is Set A, and the F prediction instances are respectively recorded as Set A #1, Set A #2, ..., Set A #F-1, and Set A #F.

In general, the purpose of Tx beam prediction and the P2 process are the same, that is, to find a suitable transmission beam with the optimal receiving beam or fixed receiving beam during transmission beam sweeping. During the beam sweeping process, the NW sweeps the transmission beam and the UE uses the fixed receiving beam.

### UE beam capability reporting

Optionally, the UE needs to report at least one of the following information:
spatial domain capacity of Set B: a maximum number of supported Tx beams measurements (at a time);
time domain capacity of Set B: a maximum number of supported measurement instances;
spatial domain capacity of Set A: a maximum number of supported Tx beam predictions (at a time);
time domain capacity of Set A: a maximum number of supported prediction instances;
whether to support prediction and reporting of Tx beam dwelling time; or
whether to support a one-time Tx beam information indication of the NW.

### Configuration, activation and update of Set A and Set B by NW

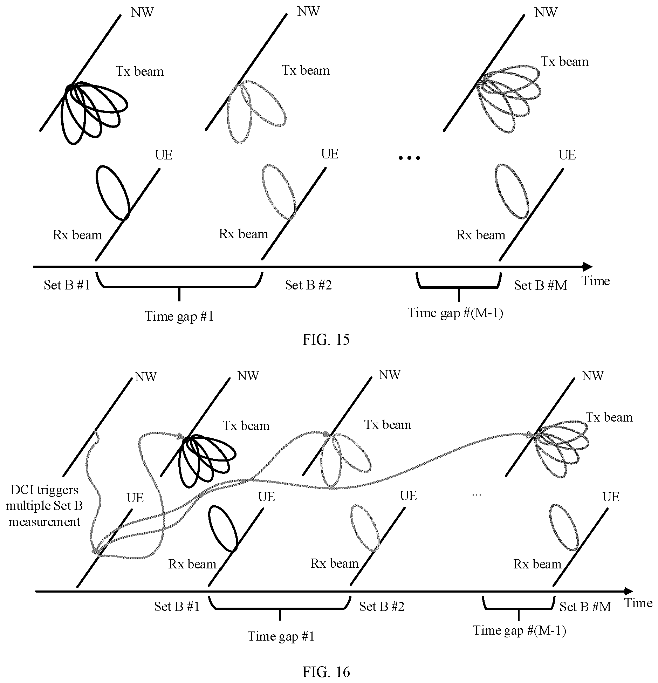

For the configuration of Set B, the M measurement instances may be fixed or not. For the non-fixed case, Set Bm, 1 <= m <= M may appear in a specific pattern. As shown in FIG. 15, Set B has different Tx beam configurations in different measurement instances.

For example, Set B #1 includes Tx beams from index #0 to index #3, Set B #2 includes Tx beams from index #4 to index #5, ..., Set B #M includes Tx beams from index #6 to index #9. The above is an example where the Tx beams do not overlap. It should be noted that the Tx beams included in different measurement instances measured by the UE may also overlap to a certain extent, or even completely overlap. For example, Set B #1 and Set B #M may include the same Tx beams index #0 to #3.

Time domain gaps between different measurement instances in Set B may be equally spaced, (e.g., periodic measurements configured by RRC); or may be unequally spaced, as shown by different time gaps in FIG. 15. For Set B measurements with unequal gaps in time domain, from the perspective of NW configuration, for periodic and semi-static measurements, the NW may configure the same periodicity and different offsets for different measurement instances.

For non-periodic Set B measurements, another method is for the NW to configure some non-periodic Set B measurements in advance, and then use DCI to dynamically trigger the non-periodic measurements, thereby achieving the purpose of unequal gap measurements. In the use case of time domain beam prediction, this case designs a piece of DCI that may trigger M (a sequence) non-periodic CSI-RSs, which may include Set B m, 1 <= m <= M, as shown in FIG. 16. The benefit of this is that the measurements of Set B may be completed using only a piece of DCI (minimal signaling overhead).

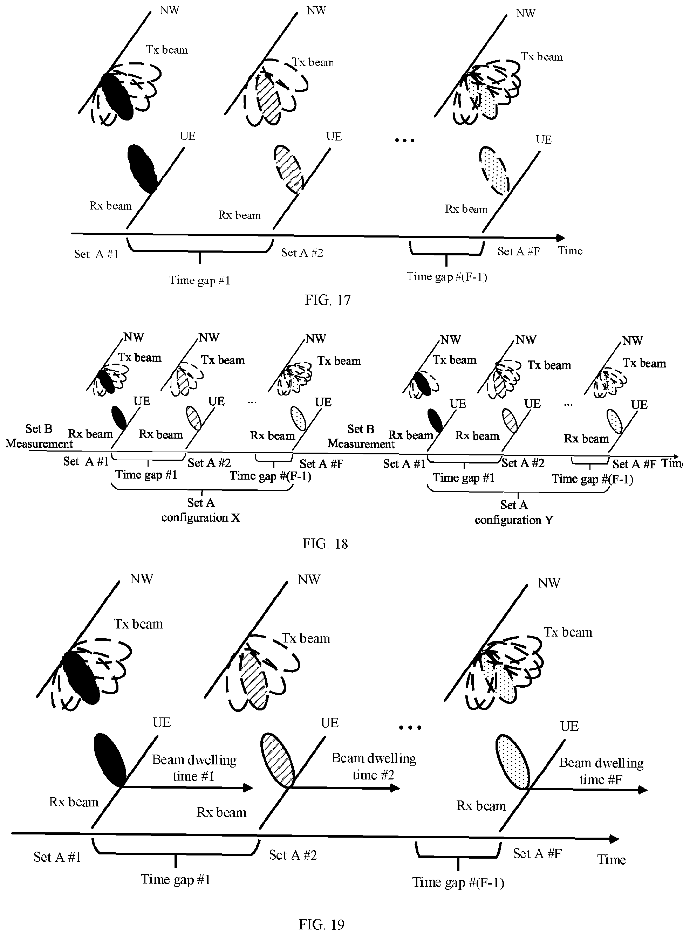

For the configuration of Set A, Set A may be fixed or not fixed on F prediction instances. For the non-fixed case, Set A f ,1 <= f <= F may appear according to a pre-configured pattern. As shown in FIG. 17, Set A has different Tx beam configurations in different prediction instances.

For example, Set A #1 includes Tx beams from index #0 to index #5, Set A #2 includes Tx beams from index #0 to index #3, ..., Set A #F includes Tx beams from index #0 to index #6. It should be noted that the above-mentioned multiple Set A may or may not overlap.

Between different predictions of Set A, time domain gaps thereof may be equally spaced (e.g., periodic prediction configured by RRC); or may be unequally spaced, as shown by the different time gaps in FIG. 17. For Set A predictions with unequal gaps, from the perspective of NW configuration, NW may configure the same periodicity and different offsets for different prediction instances.

In addition to the above configurations of Set B and Set A on multiple instances by the NW, the NW may be considered to configure a plurality of sets of Set B and Set A, and then use an MAC CE to activate a set of configurations for usage. It may also consider using the MAC CE to activate the plurality of sets of configurations for usage in turn. For example, configuration X of Set A is used, then configuration Y of Set A is used, and thereafter, configuration X and configuration Y appear alternately, as shown in FIG. 18.

### UE measurement and inference

After Set B and Set A of the NW are configured and activated, the UE performs measurements of Set B of the M measurement instances, which used as an input of the model, the measurement set Set Bm, where 1<= m <= M.

Next, the model infers the optimal K Tx beams and performance (e.g., L1-RSRP) thereof from the F prediction instances from Set Af ,1 <= f <= F. The K optimal Tx beams are obtained by sorting the L1-RSRP of the Tx beams from high to low. The value of K is generally 1, 2, 4 or 8. Alternatively, the model may infer several Tx beams as long as performance (e.g., L1-RSRP) thereof is above a pre-set threshold.

For respective prediction instances, the model may also infer the optimal Tx beam dwelling time. For example, there is a period of time between Set A #1 and Set A #2, which is defined as time gap #1. In a case where the model infers the optimal K Tx beams for the prediction instance of Set A #1, the time for which the L1-RSRP of the K Tx beams remains stable may also be predicted. The remaining stable herein may be defined based on relative quality, that is, the beam quality ranking, e.g., the time that the Top-1 Tx beam remains in the first place. The remaining stable herein may also be defined based on the absolute quality of L1-RSRP, e.g., the time when the L1-RSRP of the Top-1 Tx beam drops below a certain threshold (e.g., 3 dB). Specifically, the beam dwelling time in the time domain beam prediction may be as shown in FIG. 19.

### UE beam information reporting

After the model completes the predictions of the time domain beam pairs, the UE needs to report the prediction results of the F prediction instances of the model to the NW. Please refer to Table 5 or Table 6 for the specific format.

**Table 5 UE reports Tx beam IDs of F prediction instances and L1-RSRP performance thereof**

| CSI **Report** | CSI fields |
|---|---|
| Set A #1 | Tx beam #1 (CSI-RS resource index/SSB resource index) |
| | Tx beam #2 (CSI-RS resource index/SSB resource index) |
| | Tx beam #3 (CSI-RS resource index/SSB resource index) |
| | Tx beam #4 (CSI-RS resource index/SSB resource index) |
| | **L1-RSRP** #1 |
| | Differential L1-RSRP #2 |
| | Differential L1-RSRP #3 |
| | Differential L1-RSRP #4 |
| Set A #2 | Tx beam #1 (CSI-RS resource index/SSB resource index) |
| | Tx beam #2 (CSI-RS resource index/SSB resource index) |
| | Tx beam #3 (CSI-RS resource index/SSB resource index) |
| | Tx beam #4 (CSI-RS resource index/SSB resource index) |
| | **L1-RSRP** #1 |
| | Differential L1-RSRP #2 |
| | Differential L1-RSRP #3 |
| | Differential L1-RSRP #4 |
| ... | ... |
| Set A #F | Tx beam #1 (CSI-RS resource index/SSB resource index) |
| | Tx beam #2 (CSI-RS resource index/SSB resource index) |
| | Tx beam #3 (CSI-RS resource index/SSB resource index) |
| | Tx beam #4 (CSI-RS resource index/SSB resource index) |
| | **L1-RSRP** #1 |
| | Differential L1-RSRP #2 |
| | Differential L1-RSRP #3 |
| | Differential L1-RSRP #4 |

It should be noted that in the above Table 5, in a prediction instance, Differential L1-RSRP #2 is a difference relative to L1-RSRP #1, Differential L1-RSRP #3 is a difference relative to L1-RSRP #1, and Differential L1-RSRP #4 is a difference relative to L1-RSRP #1; L1-RSRP #1 is the L1-RSRP corresponding to Tx beam pair #1, Differential L1-RSRP #2 is the L1-RSRP corresponding to Tx beam pair #2, Differential L1-RSRP #3 is the L1-RSRP corresponding to Tx beam pair #3, and Differential L1-RSRP #4 is the L1-RSRP corresponding to Tx beam pair #4.

Table 6 UE reports Tx beam IDs, L1-RSRP performance and Tx beam dwelling time of F prediction instances. It should be noted that in the above Table 6, in a prediction instance, Differential L1-RSRP #2 is a difference relative to L1-RSRP #1, Differential L1-RSRP #3 is a difference relative to L1-RSRP #1, and Differential L1-RSRP #4 is a difference relative to L1-RSRP #1; L1-RSRP #1 is the L1-RSRP corresponding to Tx beam pair #1, Differential L1-RSRP #2 is the L1-RSRP corresponding to Tx beam pair #2, Differential L1-RSRP #3 is the L1-RSRP corresponding to Tx beam pair #3, and Differential L1-RSRP #4 is the L1-RSRP corresponding to Tx beam pair #4; Beam dwelling time #1 is the beam dwelling time of Tx beam pair #1, Beam dwelling time #2 is the beam dwelling time of Tx beam pair #2, Beam dwelling time #3 is the beam dwelling time of Tx beam pair #3, and Beam dwelling time #4 is the beam dwelling time of Tx beam pair #4.

In addition, in the format of reporting beam dwelling time, differential reporting may also be considered, i.e., Beam dwelling time #1 is an absolute time, and Beam dwelling time #2 to Beam dwelling time #4 are time differences relative to Beam dwelling time #1.

### NW beam indication

Specifically, based on the prediction results of the F prediction instances reported by the terminal device, there are at least two manners of the beam indication for the network device. The first manner is that the network device performs beam indication in batches according to the reporting of the terminal device. For example, under beam prediction of F prediction instances, F times of beam information indications are performed, that is, beams used in respective prediction instances of the F prediction instances are indicated respectively; where the beam information may be an index of the transmission beam (in NR, it is generally referred to by a resource index of SSB or CSI-RS). Another manner is to perform a one-time beam indication, that is, the network device indicates the beam information of the F prediction instances to the terminal device at a time, that is, indicates the beams used in respective prediction instances of the F prediction instances at a time. The benefit of the one-time beam indication is that the signaling overhead of beam indication may be greatly reduced.

Specifically, for example, if beam reporting of the UE does not include the beam dwelling time, the NW indicates the beam information used in respective prediction instances of the F prediction instances at a time. The MAC CE or DCI should include Tx beam index (CSI-RS/SSB) #1, Tx beam index (CSI-RS/SSB) #2, ..., Tx beam index (CSI-RS/SSB) #F. What this means in time domain is that whenever a prediction instance arrives, the NW will change to the indicated transmission beam, and the UE should also change the corresponding receiving beam.

Specifically, for example, if beam reporting of the UE includes the beam dwelling time, the NW may select to indicate the beam information and beam dwelling time used in respective prediction instances of the F prediction instances to the UE at a time. The MAC CE or DCI (i.e., the second information) should include (Tx beam index (CSI-RS/SSB) #1, Application time #1), (Tx beam index (CSI-RS/SSB) #2, Application time #2), ..., (Tx beam index (CSI-RS/SSB) #F, Application time #F). What this means in time domain is that each indicated beam pair takes effect from the predicted instance, and effective dwelling time of the indicated beam pair is the beam dwelling time indicated by the application time.

In Embodiment 2, the model is deployed on the network (NW) side, for the transmission (Tx) beam prediction. The first measurement data set is Set B, and the M measurement instances are respectively recorded as Set B #1, Set B #2, ..., Set B #M-1, and Set B #M. The first prediction data set is Set A, and the F prediction instances are respectively recorded as Set A #1, Set A #2, ..., Set A #F-1, and Set A #F.

In general, the purpose of Tx beam prediction and the P2 process are the same, that is, to find a suitable transmission beam with the optimal receiving beam or fixed receiving beam during transmission beam sweeping. During the beam sweeping process, the NW sweeps the transmission beam and the UE uses the fixed receiving beam.

### UE beam capability reporting

Optionally, the UE needs to report at least one of the following information:
spatial domain capacity of Set B: a maximum number of supported Tx beam measurements (at a time);
time domain capacity of Set B: a maximum number of supported measurement instances;
spatial domain capacity of Set A: a maximum number of supported Tx beam predictions (at a time);
time domain capacity of Set A: a maximum number of supported prediction instances;
whether to support prediction and reporting of Tx beam dwelling time; or
whether to support a one-time Tx beam information indication of the NW.

### Configuration, activation and update of Set A and Set B by NW

For the configuration of Set B, the M measurement instances may be fixed or not. For the non-fixed case, Set Bm, 1 <= m <= M may appear in a specific pattern. As shown in FIG. 15, Set B has different Tx beam configurations in different measurement instances.

For example, Set B #1 includes Tx beams from index #0 to index #3, Set B #2 includes Tx beams from index #4 to index #5, ..., Set B #M includes Tx beams from index #6 to index #9. The above is an example where the Tx beams do not overlap. It should be noted that the Tx beams included in different measurement instances measured by the UE may also overlap to a certain extent, or even completely overlap. For example, Set B #1 and Set B #M may include the same Tx beams index #0 to #3.

Time domain gaps between different measurement instances in Set B may be equally spaced (e.g., periodic measurements configured by RRC); or may be unequally spaced, as shown by the different time gaps in FIG. 15. For Set B measurements with unequal gaps in time domain, from the perspective of NW configuration, for periodic and semi-static measurements, the NW may configure the same periodicity and different offsets for different measurement instances.

For non-periodic Set B measurements, another method is for the NW to configure some non-periodic Set B measurements in advance, and then use DCI to dynamically trigger the non-periodic measurements, thereby achieving the purpose of unequal gap measurements. In the use case of time domain beam prediction, this case designs a piece of DCI that may trigger M (a sequence) non-periodic CSI-RSs, which may include Set B m, 1 <= m <= M, as shown in FIG. 16. The benefit of this is that the measurements of Set B may be completed using only a piece of DCI (minimal signaling overhead).

For the configuration of Set A, Set A may be fixed or not fixed on F prediction instances. For the non-fixed case, Set A f ,1 <= f <= F may appear according to a pre-configured pattern. As shown in FIG. 17, Set A has different Tx beam configurations in different prediction instances.

For example, Set A #1 includes Tx beams from index #0 to index #5, Set A #2 includes Tx beams from index #0 to index #3, ..., Set A #F includes Tx beams from index #0 to index #6. It should be noted that the above-mentioned multiple Set A may or may not overlap.

Between different predictions of Set A, time domain gaps thereof may be equally spaced (e.g., periodic prediction configured by RRC); or may be unequally spaced, as shown by the different time gaps in FIG. 17. For Set A predictions with unequal gaps, from the perspective of NW configuration, NW may configure the same periodicity and different offsets for different prediction instances.

In addition to the above configurations of Set B and Set A on multiple instances by the NW, the NW may be considered to configure a plurality of sets of Set B and Set A, and then use an MAC CE to activate a set of configurations for usage. It may also consider using the MAC CE to activate the plurality of sets of configurations for usage in turn. For example, configuration X of Set A is used, then configuration Y of Set A is used, and thereafter, configuration X and configuration Y appear alternately, as shown in FIG. 18.

### Measurement and reporting Set B by UE

For a case where the model deploys on the NW side, the UE needs to measure M measurement instances of Set B, and then report all measurement results to the model on the NW side. Redesigning the format of beam reporting is considered herein. The specific reporting manner is described in Example 3 and Example 4.

Example 3: reporting is performed according to the time domain order in Set B m, 1<= m <= M. In respective measurement instances, reported is performed in the order of the configured Tx beams, as shown in Table 7. Herein, only the corresponding L1-RSRP or other performance indicators need to be reported.

**Table 7 UE reports L1-RSRP value according to the order of time domain of Set B**

| **CSI Report** | **CSI fields** |
|---|---|
| Set B #1 | L1-RSRP #1 of Tx beam |
| | L1-RSRP #2 of Tx beam |
| | ... |
| | L1-RSRP # Size (Set B #1) of Tx beam |
| Set B #2 | L1-RSRP #1 of Tx beam |
| | L1-RSRP #2 of Tx beam |
| | ... |
| | L1-RSRP # Size (Set B #2) of Tx beam |
| | ... |
| Set B #M | L1-RSRP #1 of Tx beam |
| | L1-RSRP #2 of Tx beam |
| | ... |
| | L1-RSRP # Size (Set B #M) of Tx beam |

Example 4: sorting is performed according to the performance (e.g., L1-RSRP) of each Tx beam in Set B, generally in descending order of performance. As shown in Table 8, the first is the Tx beam ID in Set B, and then is the absolute value of the performance of the highest Tx beam, e.g., the absolute value quantization of L1-RSRP. For the performance of the beam pair that is not the highest performance, it may be quantified in a differential manner, that is, the difference in performance compared to the highest performance is reported.

**Table 8 UE reports Set B Tx beam ID and L1-RSRP value in order of time domain**

| **CSI Report** | **CSI fields** |
|---|---|
| Set B #1 | Tx beam #1 |
| | Tx beam #2 |
| | ... |
| | Tx beam # Size(Set B #1) |
| | **L1-RSRP** #1 |
| | Differential L1-RSRP #2 |
| | ... |
| | Differential L1-RSRP #Size(Set B #1) |
| Set B #2 | Tx beam #1 |
| | Tx beam #2 |
| | ... |
| | Tx beam # Size(Set B #2) |
| | **L1-RSRP** #1 |
| | Differential L1-RSRP #2 |
| | ... |
| | Differential L1-RSRP #Size(Set B #2) |
| | ... |
| Set B #M | Tx beam #1 |
| | Tx beam #2 |
| | ... |
| | Tx beam # Size(Set B #M) |
| | **L1-RSRP** #1 |
| | Differential L1-RSRP #2 |
| | ... |
| | Differential L1-RSRP #Size(Set M) |

It should be noted that, in the above Table 8, in a prediction instance, Differential L1-RSRP #2 is a difference relative to L1-RSRP #1, Differential L1-RSRP #3 is a difference relative to L1-RSRP #1, and Differential L1-RSRP #4 is a difference relative to L1-RSRP #1.

### NW performing beam prediction

NW uses the model to infer the optimal K Tx beams and performance (e.g., L1-RSRP) thereof from the F prediction instances from Set Af ,1 <= f <= F. The K optimal Tx beams are obtained by sorting the L1-RSRP of the Tx beams from high to low. The value of K is generally 1, 2, 4 or 8. Alternatively, the model may infer several Tx beams as long as performance (e.g., L1-RSRP) thereof is above a pre-set threshold.

For respective prediction instances, the model may also infer the optimal Tx beam dwelling time. For example, there is a period of time between Set A #1 and Set A #2, which is defined as time gap #1. In a case where the model infers the optimal K Tx beams for the prediction instance of Set A #1, the time for which the L1-RSRP of the K Tx beams remains stable may also be predicted. The remaining stable herein may be defined based on relative quality, that is, the beam quality ranking, e.g., the time that the Top-1 Tx beam remains in the first place. The remaining stable herein may also be defined based on the absolute quality of L1-RSRP, e.g., the time when the L1-RSRP of the Top-1 Tx beam drops below a certain threshold (e.g., 3 dB).

### NW beam indication

Specifically, based on the prediction results of the F prediction instances predicted by the network device, there are at least two manners of the beam indication for the network device. The first manner is that the network device performs beam indication in batches according to the prediction results. For example, under the beam prediction of F prediction instances, F beam information indications are performed, that is, beams used in respective prediction instances of the F prediction instances are indicated respectively; where the beam information may be an index of the transmission beam (in NR, it is generally referred to by an resource index of SSB or CSI-RS). Another manner is to perform a one-time beam indication, that is, the network device indicates the beam information of the F prediction instances to the terminal device at a time, that is, indicates the beams used in respective prediction instances of the F prediction instances at a time. The benefit of the one-time beam indication is that the signaling overhead of beam indication may be greatly reduced.

Specifically, for example, if the prediction results of the prediction instances predicted by the network device do not include the beam dwelling time, the network device indicates the beam information used in respective prediction instances of the F prediction instances at a time. The MAC CE or DCI should include Tx beam index (CSI-RS/SSB) #1, Tx beam index (CSI-RS/SSB) #2, ..., and Tx beam index (CSI-RS/SSB) #F. What this means in time domain is that whenever a prediction instance arrives, the NW will change to the indicated transmission beam, and the UE should also change the corresponding receiving beam.

Specifically, for example, if the prediction results of the prediction instances predicted by the network device include the beam dwelling time, the network device may select to indicate the beam information and beam dwelling time used in respective prediction instances of the F prediction instances to the UE at a time. The MAC CE or DCI should include (Tx beam index (CSI-RS/SSB) #1, Application time #1), (Tx beam index (CSI-RS/SSB) #2, Application time #2), ..., and (Tx beam index (CSI-RS/SSB) #F, Application time #F). What this means in time domain is that each indicated beam pair takes effect from the predicted instance, and effective dwelling time of the indicated beam pair is the beam dwelling time indicated by the application time.

Therefore, in the embodiments of the present disclosure, the first communication device may implement spatial filter prediction in time domain based on the first network model, and the first communication device does not need to sweep all deployed spatial filters, which is beneficial to reducing the overhead and delay caused by spatial filter sweeping.

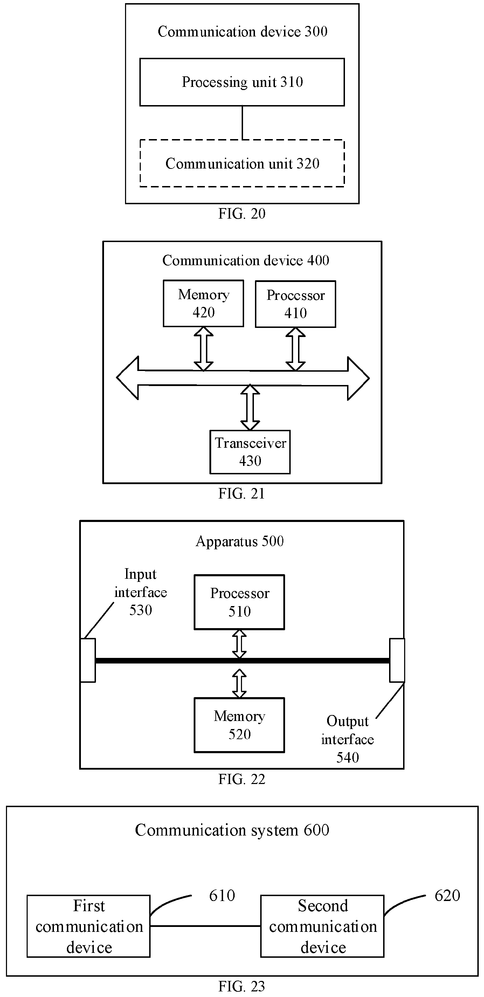

The method embodiments of the present disclosure are described in detail above in combination with FIGS. 10 to 19. The apparatus embodiments of the present disclosure will be described in detail in combination with FIGS. 20 to 23 below. It should be understood that the apparatus embodiments and the method embodiments correspond to each other, and similar descriptions may refer to the method embodiments.

FIG. 20 shows a schematic block diagram of a communication device 300 according to the embodiments of the present disclosure. The communication device 300 is a first communication device. As shown in FIG. 20, the communication device 300 includes:
a processing unit 310, configured to acquire a first measurement data set; where the first measurement data set includes at least one of: identification information of spatial filters in M measurement instances, or link quality information corresponding to the spatial filters in the M measurement instances; where M is a positive integer; and
the processing unit 310 is further configured to input the first measurement data set into a first network model, to output a first prediction data set; where the first prediction data set includes at least one of: identification information of predicted K spatial filters in respective prediction instances of F prediction instances, link quality information corresponding to the predicted K spatial filters in the respective prediction instances of the F prediction instances, or dwelling time of the predicted K spatial filters in the respective prediction instances of the F prediction instances; where F and K are both positive integers.

In some embodiments, spatial filters in the respective measurement instances of the M measurement instances are partial spatial filters of all spatial filters.

In some embodiments, configurations of the spatial filters in the respective measurement instances of the M measurement instances are the same; or,
configurations of spatial filters in at least some measurement instances of the M measurement instances are different.

In some embodiments, partial spatial filters in different measurement instances of the M measurement instances are the same.

In some embodiments, the M measurement instances are set at equal gaps in time domain.

In some embodiments, the M measurement instances correspond to periodic spatial filter measurements during a first duration.

In some embodiments, the M measurement instances are set at unequal gaps in time domain.

In some embodiments, gaps between the M measurement instances in time domain are determined based on a moving speed of a terminal device.

In some embodiments, different measurement instances of the M measurement instances correspond to a same periodicity and different offsets.

In some embodiments, the M measurement instances are measurement instances activated by downlink control information (DCI) or a media access control control element (MAC CE) and of a plurality of semi-persistent scheduling (SPS) measurement instances; or,
the M measurement instances are measurement instances dynamically triggered by DCI and of a plurality of pre-configured measurement instances.

In some embodiments, the M measurement instances are measurement instances corresponding to a set of measurement configurations activated by DCI or an MAC CE of a plurality of sets of measurement configurations, or the M measurement instances are measurement instances corresponding to a current measurement configuration of a plurality of sets of measurement configurations activated by DCI or an MAC CE and used in turn.

In some embodiments, spatial filters in respective measurement instances of the F prediction instances are partial spatial filters in all spatial filters.

In some embodiments, configurations of the spatial filters in the respective prediction instances of the F prediction instances are the same; or,
configurations of spatial filters in at least some prediction instances of the F prediction instances are different.

In some embodiments, partial or all of the spatial filters in different prediction instances of the F prediction instances are the same.

In some embodiments, the F prediction instances are set at equal gaps in time domain.

In some embodiments, the F prediction instances correspond to periodic spatial filter predictions during a second duration.

In some embodiments, the F prediction instances are set at unequal gaps in time domain.

In some embodiments, gaps between the F prediction instances in time domain are determined based on a moving speed of a terminal device.

In some embodiments, different prediction instances of the F prediction instances correspond to a same periodicity and different offsets.

In some embodiments, the F prediction instances are prediction instances activated by DCI or an MAC CEand of a plurality of SPS prediction instances; or, the F prediction instances are prediction instances dynamically triggered by DCI and of a plurality of pre-configured prediction instances.

In some embodiments, the F prediction instances are prediction instances corresponding to a set of prediction configurations activated by DCI or an MAC CE of a plurality of sets of prediction configurations, or the F prediction instances are prediction instances corresponding to a current prediction configuration of a plurality of sets of prediction configurations activated by DCI or an MAC CE and used in turn.

In some embodiments, a value of K includes one of: 1, 2, 4, or 8.

In some embodiments, the communication device 300 further includes: a communication unit 320; and
the communication unit 320 is configured to transmit first information;
where the first information includes at least one of: the identification information of the predicted K spatial filters in the respective prediction instances of the F prediction instances, the link quality information corresponding to the predicted K spatial filters in the respective prediction instances of the F prediction instances, or the dwelling time of the predicted K spatial filters in the respective prediction instances of the F prediction instances.

In some embodiments, the link quality information corresponding to the K spatial filters is transmitted in a differential manner.

In some embodiments, the communication unit 320 is further configured to receive second information determined based on the first information;
where the second information is used to indicate the identification information of the spatial filters used in the respective prediction instances of the F prediction instances, or the second information is used to indicate identification information of spatial filters used in an i-th prediction instance; or the second information is used to indicate the identification information and dwelling time of the spatial filters used in respective prediction instances of the F prediction instances, or the second information is used to indicate identification information and dwelling time of spatial filters used in an i-th prediction instance; and
where, i is a positive integer, and 1 ≤i≤F.

In some embodiments, the communication unit 320 is further configured to transmit first capability information;
where the first capability information includes at least one of: a maximum number of spatial filters supported by the first measurement data set, a maximum number of measurement instances supported by the first measurement data set, a maximum number of spatial filters supported by the first prediction data set, a maximum number of prediction instances supported by the first prediction data set, whether to support prediction and reporting of dwelling time of spatial filters, or whether to support identification information of indicating spatial filters in a plurality of prediction instances at a time.

In some embodiments, the first communication device is a terminal device.

In some embodiments, the communication unit 320 is further configured to transmit third information;
where the third information is used to indicate the identification information of the spatial filters used in the respective prediction instances of the F prediction instances, or the third information is used to indicate identification information of spatial filters used in an i-th prediction instance; or the third information is used to indicate the identification information and dwelling time of the spatial filters used in the respective prediction instances of the F prediction instances, or the third information is used to indicate identification information and dwelling time of spatial filters used in an i-th prediction instance; and
where, i is a positive integer, and 1 ≤i≤F.

In some embodiments, the communication unit 320 is further configured to receive the first capability information;
where the first capability information includes at least one of: a maximum number of spatial filters supported by the first measurement data set, a maximum number of measurement instances supported by the first measurement data set, a maximum number of spatial filters supported by the first prediction data set, a maximum number of prediction instances supported by the first prediction data set, whether to support prediction and reporting of dwelling time of spatial filters, or whether to support identification information of indicating spatial filters in a plurality of prediction instances at a time.

In some embodiments, the first communication device is a network device.

In some embodiments, the spatial filters include a transmission spatial filter; or,
the spatial filters include a transmission spatial filter and a receiving spatial filter.

In some embodiments, the above communication unit may be a communication interface or a transceiver, or an input/output interface of a communication chip or a system on chip. The above processing unit may be one or more processors.

It should be understood that the communication device 300 according to the embodiments of the present disclosure may correspond to the first communication device in the method embodiments of the present disclosure, and the above-mentioned and other operations and/or functions of various units in the communication device 300 are respectively for implementing corresponding processes of the first communication device in the method 200 shown in FIG. 10, which will not be repeated herein for the sake of brevity.

FIG. 21 is a schematic structural diagram of a communication device 400 provided in the embodiments of the present disclosure. The communication device 400 shown in FIG. 21 includes a processor 410, which may call a computer program from a memory and run the computer program to implement the methods in the embodiments of the present disclosure.

In some embodiments, as shown in FIG. 21, the communication device 400 may further include a memory 420. The processor 410 may call a computer program from the memory 420 and run the computer program to implement the methods in the embodiments of the present disclosure.

The memory 420 may be a separate device independent of the processor 410, or may be integrated into the processor 410.

In some embodiments, as shown in FIG. 21, the communication device 400 may further include a transceiver 430, and the processor 410 may control the transceiver 430 to communicate with other devices, specifically, may transmit information or data to other devices, or receive information or data transmitted from other devices.

The transceiver 430 may include a transmitter and a receiver. The transceiver 430 may further include an antenna, and a number of the antennas may be one or more.

In some embodiments, the processor 410 may implement functions of a processing unit in the communication device 300, which will not be repeated herein for the sake of brevity.

In some embodiments, the transceiver 430 may implement functions of a communication unit in the communication device 300, which will not be repeated herein for the sake of brevity.

In some embodiments, the communication device 400 may specifically be the communication device of the embodiments of the present disclosure, and the communication device 400 may implement corresponding processes implemented by the first communication device in various methods of the embodiments of the present disclosure, which will not be repeated herein for the sake of brevity.

FIG. 22 is a schematic structural diagram of an apparatus according to the embodiments of the present disclosure. The apparatus 500 shown in FIG. 22 includes a processor 510, and the processor 510 may call a computer program from a memory and run the computer program to implement the methods in the embodiments of the present disclosure.

In some embodiments, as shown in FIG. 22, the apparatus 500 may further include a memory 520. The processor 510 may call a computer program from the memory 520 and run the computer program to implement the methods in the embodiments of the present disclosure.

The memory 520 may be a separate device independent of the processor 510, or may be integrated into the processor 510.

In some embodiments, the apparatus 500 may further include an input interface 530. The processor 510 may control the input interface 530 to communicate with other devices or chips, and specifically, may acquire information or data transmitted from other devices or chips. Optionally, the processor 510 may be located on a chip or off a chip.

In some embodiments, the processor 510 may implement functions of a processing unit in the communication device 300, which will not be repeated herein for the sake of brevity.

In some embodiments, the input interface 530 may implement functions of a communication unit in the communication device 300.

In some embodiments, the apparatus 500 may further include an output interface 540. The processor 510 may control the output interface 540 to communicate with other devices or chips, and specifically, may output information or data to other devices or chips. Optionally, the processor 510 may be located on a chip or off a chip.

In some embodiments, the output interface 540 may implement functions of a communication unit in the communication device 300.

In some embodiments, the apparatus may be applied to the communication device in the embodiments of the present disclosure, and the apparatus may implement corresponding processes implemented by the first communication device in the various methods in the embodiments of the present disclosure, which will not be repeated herein for the sake of brevity.

In some embodiments, the apparatus mentioned in the embodiments of the present disclosure may also be a chip. For example, the apparatus may be a system level chip, a system-on-chip, a chip system, or a system-on-chip chip.

FIG. 23 is a schematic block diagram of a communication system 600 provided in the embodiments of the present disclosure. As shown in FIG. 23, the communication system 600 includes a first communication device 610 and a second communication device 620.

The first communication device 610 may be configured to implement corresponding functions implemented by the first communication device in the above method, and the second communication device 620 may be configured to implement corresponding functions implemented by the second communication device in the above method, which will not be repeated herein for the sake of brevity.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present disclosure may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus ram (DR RAM), etc. That is, the memory in the embodiments of the present disclosure is intended to include, but not limited to, these and any other suitable types of memories.

A computer-readable storage medium is provided in the embodiments of the present disclosure for storing a computer program.

In some embodiments, the computer-readable storage medium may be applied to the communication device in the embodiments of the present disclosure, and the computer program enables the computer to perform corresponding processes implemented by the first communication device in the various methods of the embodiments of the present disclosure, which will not be repeated herein, for the sake of brevity.

A computer program product is provided in the embodiments of the present disclosure, including computer program instructions.

In some embodiments, the computer program product may be applied to the communication device in the embodiments of the present disclosure, and the computer program instructions enable the computer to perform corresponding processes implemented by the first communication device in the various methods of the embodiments of the present disclosure, which will not be repeated herein, for the sake of brevity.

A computer program is provided in the embodiments of the present disclosure.

In some embodiments, the computer program may be applied to the communication device in the embodiments of the present disclosure. Upon running on a computer, the computer program enables the computer to perform corresponding processes implemented by the first communication device in the various methods of the embodiments of the present disclosure, which will not be repeated herein, for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to corresponding procedures in the above method embodiments, which will not be repeated herein.

In the several embodiments provided by the present application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in a form of a software functional unit and sold or used as an independent product, they may be stored in a computer-readable storage medium. Based on this understanding, the technical solution of the present disclosure essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a read-only memory (ROM), a random access memory (RAM), a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. A wireless communication method, comprising:
acquiring, by a first communication device, a first measurement data set; wherein the first measurement data set comprises at least one of: identification information of spatial filters in M measurement instances, or link quality information corresponding to the spatial filters in the M measurement instances; wherein M is a positive integer; and
inputting, by the first communication device, the first measurement data set into a first network model, to output a first prediction data set; wherein the first prediction data set comprises at least one of: identification information of predicted K spatial filters in respective prediction instances of F prediction instances, link quality information corresponding to the predicted K spatial filters in the respective prediction instances of the F prediction instances, or dwelling time of the predicted K spatial filters in the respective prediction instances of the F prediction instances; wherein F and K are both positive integers.

2. The method according to claim 1, wherein
spatial filters in respective measurement instances of the M measurement instances are partial spatial filters of all spatial filters.

3. The method according to claim 2, wherein
configurations of the spatial filters in the respective measurement instances of the M measurement instances are the same; or,
configurations of spatial filters in at least some measurement instances of the M measurement instances are different.

4. The method according to claim 2 or 3, wherein
partial spatial filters in different measurement instances of the M measurement instances are the same.

5. The method according to any one of claims 1 to 4, wherein
the M measurement instances are set at equal gaps in time domain.

6. The method according to claim 5, wherein
the M measurement instances correspond to periodic spatial filter measurements during a first duration.

7. The method according to any one of claims 1 to 4, wherein
the M measurement instances are set at unequal gaps in time domain.

8. The method according to claim 7, wherein
the gaps between the M measurement instances in time domain are determined based on a moving speed of a terminal device.

9. The method according to claim 7 or 8, wherein
different measurement instances of the M measurement instances correspond to a same periodicity and different offsets.

10. The method according to any one of claims 7 to 9, wherein
the M measurement instances are measurement instances activated by downlink control information (DCI) or a media access control control element (MAC CE) and of a plurality of semi-persistent scheduling (SPS) measurement instances; or,
the M measurement instances are measurement instances dynamically triggered by DCI and of a plurality of pre-configured measurement instances.

11. The method according to any one of claims 1 to 9, wherein the M measurement instances are measurement instances corresponding to a set of measurement configurations activated by DCI or an MAC CE and of a plurality of sets of measurement configurations, or the M measurement instances are measurement instances corresponding to a current measurement configuration of a plurality of sets of measurement configurations, activated by DCI or an MAC CE and used in turn.

12. The method according to any one of claims 1 to 11, wherein
spatial filters in the respective measurement instances of the F prediction instances are partial spatial filters in all spatial filters.

13. The method according to claim 12, wherein
configurations of the spatial filters in the respective prediction instances of the F prediction instances are the same; or,
configurations of spatial filters in at least some prediction instances of the F prediction instances are different.

14. The method according to claim 12 or 13, wherein
partial or all of spatial filters in different prediction instances of the F prediction instances are the same.

15. The method according to any one of claims 1 to 14, wherein
the F prediction instances are set at equal gaps in time domain.

16. The method according to claim 15, wherein
the F prediction instances correspond to periodic spatial filter predictions during a second duration.

17. The method according to any one of claims 1 to 14, wherein
the F prediction instances are set at unequal gaps in time domain.

18. The method according to claim 17, wherein
the gaps between the F prediction instances in time domain are determined based on a moving speed of a terminal device.

19. The method according to claim 17 or 18, wherein
different prediction instances of the F prediction instances correspond to a same periodicity and different offsets.

20. The method according to any one of claims 17 to 19, wherein
the F prediction instances are prediction instances activated by DCI or an MAC CE and of a plurality of SPS prediction instances; or,
the F prediction instances are prediction instances dynamically triggered by DCI and of a plurality of pre-configured prediction instances.

21. The method according to any one of claims 1 to 19, wherein the F prediction instances are prediction instances corresponding to a set of prediction configurations activated by DCI or an MAC CE and of a plurality of sets of prediction configurations, or the F prediction instances are prediction instances corresponding to a current prediction configuration of a plurality of sets of prediction configurations, activated by DCI or an MAC CE and used in turn.

22. The method according to any one of claims 1 to 21, wherein
a value of K comprises one of: 1, 2, 4, or 8.

23. The method according to any one of claims 1 to 22, wherein the method further comprises:
transmitting, by the first communication device, first information;
wherein the first information comprises at least one of: the identification information of the predicted K spatial filters in the respective prediction instances of the F prediction instances, the link quality information corresponding to the predicted K spatial filters in the respective prediction instances of the F prediction instances, or the dwelling time of the predicted K spatial filters in the respective prediction instances of the F prediction instances.

24. The method according to claim 23, wherein
the link quality information corresponding to the K spatial filters is transmitted in a differential manner.

25. The method according to claim 23 or 24, wherein the method further comprises:
receiving, by the first communication device, second information determined based on the first information;
wherein the second information is used to indicate the identification information of the spatial filters used in the respective prediction instances of the F prediction instances, or the second information is used to indicate identification information of spatial filters used in an i-th prediction instance; or the second information is used to indicate identification information and dwelling time of spatial filters used in the respective prediction instances of the F prediction instances, or the second information is used to indicate identification information and dwelling time of spatial filters used in an i-th prediction instance;
wherein, i is a positive integer, and 1≤i≤F.

26. The method according to any one of claims 1 to 25, wherein the method further comprises:
transmitting, by the first communication device, first capability information;
wherein the first capability information comprises at least one of: a maximum number of spatial filters supported by the first measurement data set, a maximum number of measurement instances supported by the first measurement data set, a maximum number of spatial filters supported by the first prediction data set, a maximum number of prediction instances supported by the first prediction data set, whether to support prediction and reporting of dwelling time of spatial filters, or whether to support identification information of indicating spatial filters in a plurality of prediction instances at a time.

27. The method according to any one of claims 1 to 26, wherein the first communication device is a terminal device.

28. The method according to any one of claims 1 to 22, wherein the method further comprises:
transmitting, by the first communication device, third information;
wherein the third information is used to indicate identification information of spatial filters used in the respective prediction instances of the F prediction instances, or the third information is used to indicate identification information of spatial filters used in an i-th prediction instance; or the third information is used to indicate identification information and dwelling time of spatial filters used in the respective prediction instances of the F prediction instances, or the third information is used to indicate identification information and dwelling time of spatial filters used in an i-th prediction instance;
wherein, i is a positive integer, and 1≤i≤F.

29. The method according to any one of claims 1 to 22 and 28, wherein the method further comprises:
receiving, by the first communication device, first capability information;
wherein the first capability information comprises at least one of: a maximum number of spatial filters supported by the first measurement data set, a maximum number of measurement instances supported by the first measurement data set, a maximum number of spatial filters supported by the first prediction data set, a maximum number of prediction instances supported by the first prediction data set, whether to support prediction and reporting of dwelling time of spatial filters, or whether to support identification information of indicating spatial filters in a plurality of prediction instances at a time.

30. The method according to any one of claims 1 to 22, 28 and 29, wherein
the first communication device is a network device.

31. The method according to any one of claims 1 to 30, wherein
the spatial filters comprise a transmission spatial filter; or,
the spatial filters comprise a transmission spatial filter and a receiving spatial filter.

32. A communication device, wherein the communication device is a first communication device, and the communication device comprises:
a processing unit, configured to acquire a first measurement data set; wherein the first measurement data set comprises at least one of: identification information of spatial filters in M measurement instances, or link quality information corresponding to the spatial filters in the M measurement instances; wherein M is a positive integer;
wherein the processing unit is further configured to input the first measurement data set into a first network model, to output a first prediction data set; wherein the first prediction data set comprises at least one of: identification information of predicted K spatial filters in respective prediction instances of F prediction instances, link quality information corresponding to the predicted K spatial filters in the respective prediction instances of the F prediction instances, or dwelling time of the predicted K spatial filters in the respective prediction instances of the F prediction instances; wherein F and K are both positive integers.

33. A communication device, comprising: a processor and a memory, wherein the memory is configured to store a computer program, and the processor is configured to call and run the computer program stored in the memory, to enable the communication device to perform the method according to any one of claims 1 to 31.

34. A chip, comprising: a processor, configured to call a computer program from a memory and run the computer program, to enable a device equipped with the chip to perform the method according to any one of claims 1 to 31.

35. A computer-readable storage medium, wherein the computer-readable storage medium is configured to store a computer program, wherein when the computer program is executed, the method according to any one of claims 1 to 31 is implemented.

36. A computer program product, wherein the computer program product comprises computer program instructions, and when the computer program instructions are executed, the method according to any one of claims 1 to 31 is implemented.

37. A computer program, wherein when the computer program is executed, the method according to any one of claims 1 to 31 is implemented.
